# EUROPÄISCHE PATENTANMELDUNG

(11) **EP 1 059 146 A2**
(43) Veröffentlichungstag der Anmeldung: **13.12.2000**
(21) Anmeldenummer: 00110346.4
(22) Anmeldetag: 15.05.2000
(51) Int. Cl.: B25J 9/08, B25J 19/00, B60K 1/02, B62D 63/00, B63B 38/00, B64C 39/00

(54) **Multiblock-Robot System**

(30) Priorität: 31.05.1999 DE 19924851
(71) Anmelder: Kochammeck, Uwe, 44023 Dortmund (DE)
(72) Erfinder: Kochammeck, Uwe, 44023 Dortmund (DE)

(57) **Zusammenfassung**

Bei einem Multiblock Robot System sollen die Vorteile der flexiblen Multiachsen-Robot Systeme dadurch genutzt werden, daß standardisierte, zueinander kompatible und zusammensteckbare stationäre und mobile, erd-, see-, flug- und raumfahrtfähige Multiblock Robot-System-Standardzellen und Multiblock Roboter gebildet werden, die mit minimalem Aufwand in Entwicklung und Konstruktion erstellt werden und durch wahlfreie Kombination untereinander und mit dem Gesamtspektrum aller Multiblock Robot Standard Teile, zu zielgerichteten, stationären und mobilen Multiblock Robot Individualsystemen und Multiblock Robot Festland-, See-, Flug-, und Raumfahrt-Gesamtkomplexen ausgebildet werden, die untereinander austauschbar sind und außerdem jederzeit aufgelöst und zu beliebig anderen Multiblock Robot-Systemlösungen zusammengesteckt werden können.

## Beschreibung

Die Erfindung betrifft ein Multiblock Robot System mit zueinander kompatiblen Multiblock Robot-System-Standardzellen und Multiblock Robotern, die sowohl auf der Erde, in der Meerestechnik, in der Flugtechnik und im Weltraum eingesetzt werden. Gemäß U.S- Patent 5,241,875, 5,850,762 und 5,852,353, sowie U.S. Patent Anmeldung 07/986,532, 08/865,524, 09/298,204, sind Multiblock Robot Systeme bekannt. Diese erbringen den Vorteil, daß zielgerichtete Multiblock Robot-Gesamtsysteme zu standardisierten, annähernd baugleichen Multiblock-Normteilen aufgelöst werden, die mit minimalem Aufwand in Entwicklung und Konstruktion erstellt werden können und mit wenigen Handgriffen von den Anwendern selbst für das ursprünglich angestrebte Wirkungsspektrum eingesetzt werden, untereinander austauschbar sind und außerdem zu anderen Robot-Systemlösungen zusammengesteckt werden können.

Aufgabe der vorliegenden Erfindung ist es, durch die Einführung einer minimierten Anzahl zusätzlicher Multiblock-Normteile und die Integration von zueinander kompatiblen Multiblock Robot-System-Standardzellen und Multiblock Robotern, eine alle Lebensbereiche erfassende standardisierte Systemtechnik zu erreichen, deren Komponenten übergreifend, auf der Erde, in der Meerestechnik, in der Flug- und Raketentechnik und der Weltraumtechnik eingesetzt werden und somit die Vorteile der flexiblen Multiachsen-Robot Systeme durch zusätzliche hohe Stückzahlen in all diesen Anwendungsbereichen, in der Standardisierung, wirtschaftlichen Herstellung, Funktionalität und Anwendungsbreite, noch zu erweitern.

Dies ist gemäß der vorliegenden Erfindung dadurch erreicht, daß standardisierte, zueinander kompatible und zusammensteckbare stationäre und mobile, erd-, see-, flug- und raumfahrtfähige Multiblock Robot System-Standardzellen und Multiblock Roboter gebildet werden, die mit minimalem Aufwand in Entwicklung und Konstruktion erstellt werden und durch wahlfreie Kombination untereinander und mit dem Gesamtspektrum aller Multiblock Robot Standard Teile, zu zielgerichteten, stationären und mobilen Multiblock Robot Individualsystemen und Multiblock Robot Festland-, See-, Flug-, und Raumfahrt-Gesamtkomplexen ausgebildet werden, die untereinander austauschbar sind und außerdem jederzeit aufgelöst und zu beliebig anderen Multiblock Robot-Systemlösungen zusammengesteckt werden können.

Hiermit ist gegenüber dem Stand der Technik erreicht, daß die Vielfalt, Funktion und wirtschaftliche Herstellung aller Baugruppen der Multiblock Robot Systemtechnik durch die Erschließung dieser, alle Lebensbereiche umfassenden Anwendungsbereiche weiter gesteigert wird. Zusätzlich erschließen sich auf der Erde, in der Meerestechnik, der Flugtechnik und der Weltraumtechnik gänzlich neue Anwendungsperspektiven, wobei der Einsatz von Multiblock Robotern unumgänglich ist und durch die Ausprägung einer Multiblock Robot gerechten Systemumgebung, zusätzliche Wirtschaftlichkeit erreicht.

Ausgestaltungen der Erfindung sind in den Unteransprüchen genannt.
Die Erfindung wird im folgenden anhand von Ausführungsbeispielen, mit Bezug auf die Zeichnung und Sichtlinien zu Unterdetails, näher erläutert. In dieser zeigt:

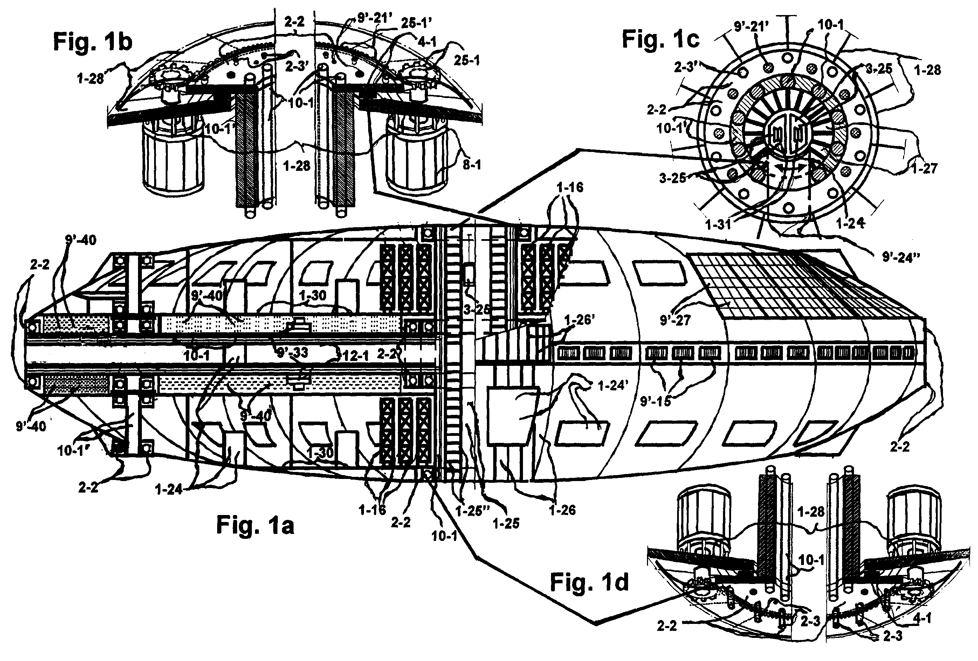

Fig. 1a,b,c, die Vorderansicht mit Teilschnitt, einer Multiblock Robot-System-Standardzelle; das perspektivische Detail der Unteransicht in Richtung der durchgezogenen Sichtlinie der zentralen Drehflansch-Steckverbindung; das perspektivische Draufsichtdetail der zentralen Drehflansch-Steckverbindung; das Draufsichtdetail auf die zentrale Drehflansch-Steckverbindung, auf den zentralen Versorgungskanal im Schnitt und auf den zentralen Zugangskanal;

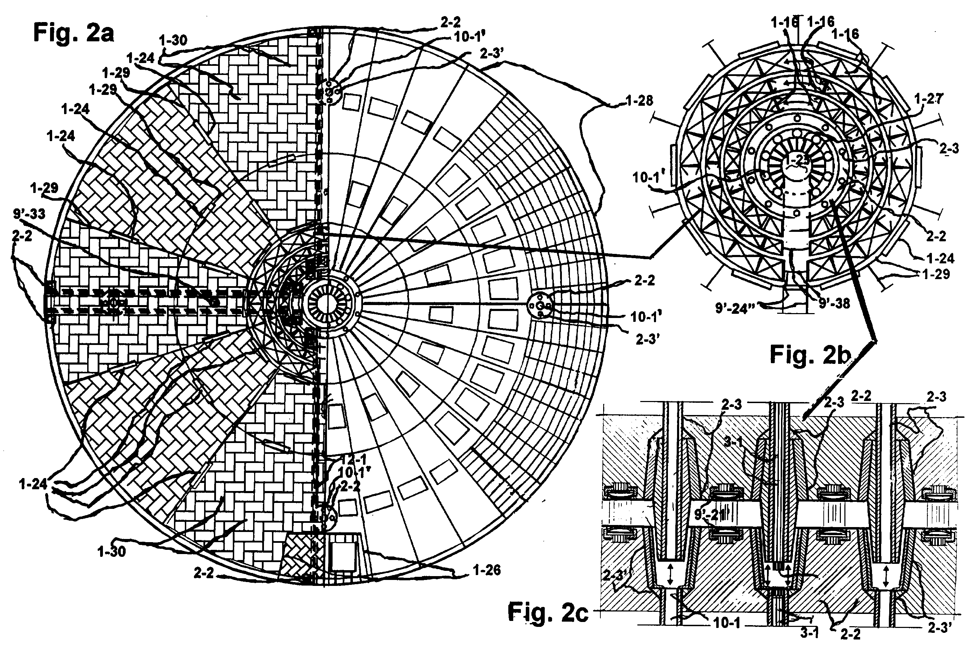

Fig. 2a,b,c, die Draufsicht mit Teilschnitt, der Multiblock Robot-System-Standardzelle gemäß der Fig. 1; das Draufsichtsdetail auf die zentrale Drehflansch-Steckverbindung mit zentralem Versorgungs- und Zugangskanal, sowie auf drei zentral angeordnete, konzentrische Ringkörper; den Schnitt in der Vorderansicht durch zwei Multiblock Robot-System-Standardzellen im Bereicht der Drehflansch-Steckverbindungen, während des Zusammensteck-Vorgangs;

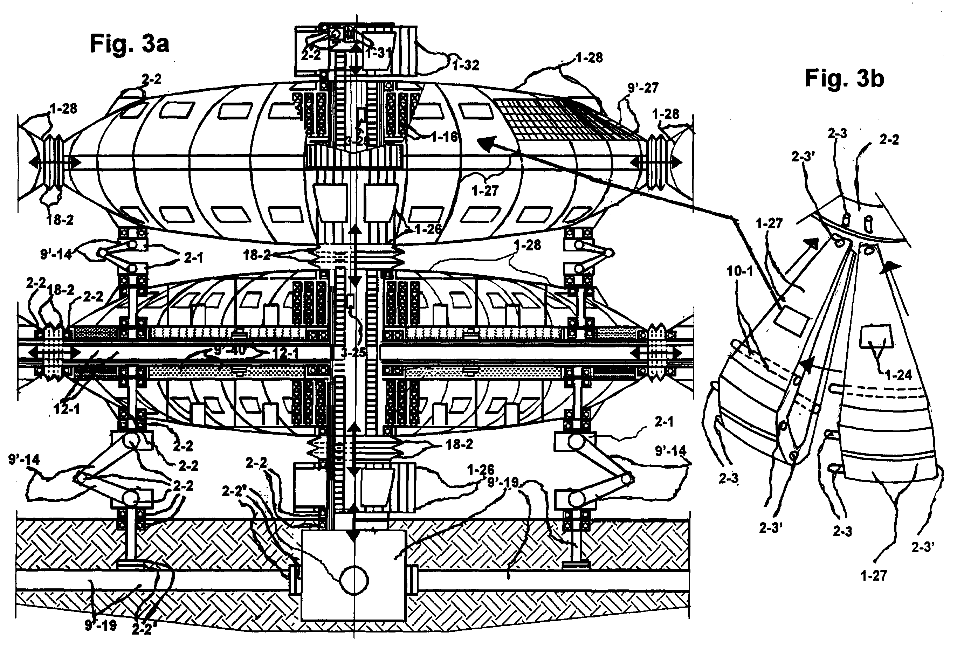

Fig. 3a,b, in der Vorderansicht mit Teilschnitt, stationäre, übereinander und nebeneinander zusammengesteckte, in X- und Y-Richtung bewegungsflexible Multiblock Robot-System-Standardzellen, gemäß der Fig. 1, mit Multiblock Robot Standard Eingang- und Dach-Flanschaufsteckeinheiten; in perspektivischer Darstellung zwei zum Zusammenstecken vorbereitete Multiblock Robot Standardzellen Teilsegmente;

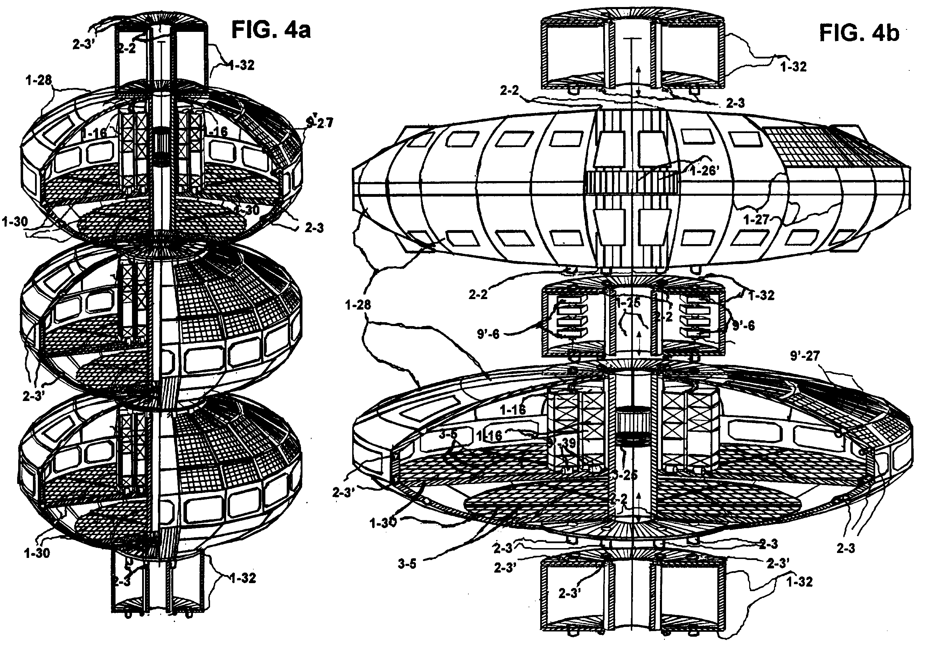

Fig. 4a,b, die perspektivische Ansicht von drei stationären, direkt übereinander zusammengesteckten Multiblock Robot-System-Standardzellen, mit zentralem Zugangskanal, Zwischenböden und jeweils zwei zentral angeordneten, konzentrischen Ringkörpern und mit Multiblock Robot Standard Eingang- und Dach-Flanschaufsteckeinheiten; in perspektivischer Ansicht und in der Vorderansicht, zwei übereinander zusammengesteckte Multiblock Robot System-Standardzellen, mit zentralem Zugangskanal, einer Multiblock Robot Eingang-Flanschaufsteckeinheit und jeweils einer Multiblock Robot Dach-Flanschaufsteckeinheit;

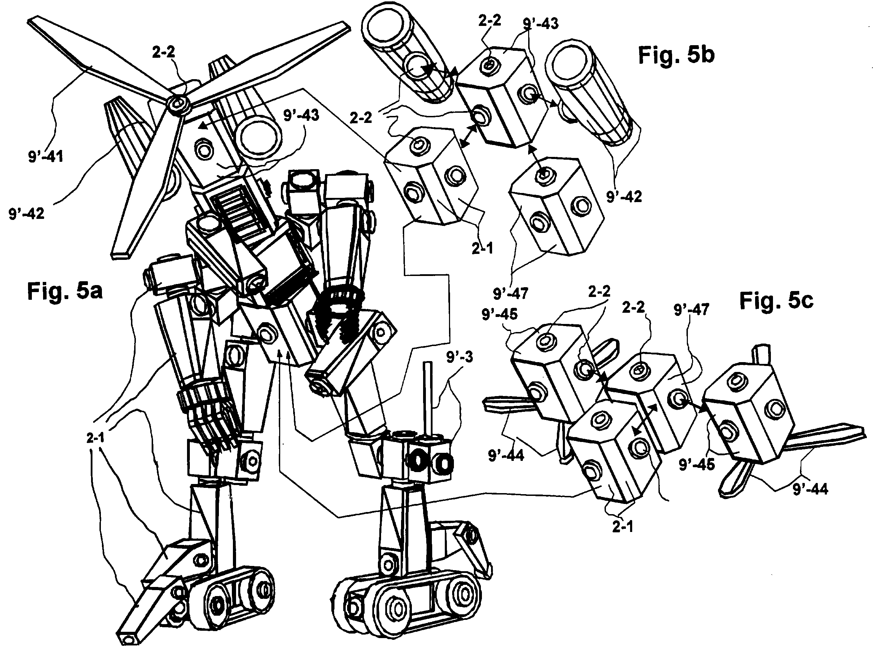

Fig. 5a,b,c, in perspektivischer Darstellung einen Multiblock Flug-Robot; die zugehörigen Flanschaufsteckgehäuse für die Flugfähigkeit; die zugehörigen Flanschaufsteckeinheiten für die Umwandlung des Multiblock Flug-Robots in einen Multiblock Flug- und unter Wasser-Robot;

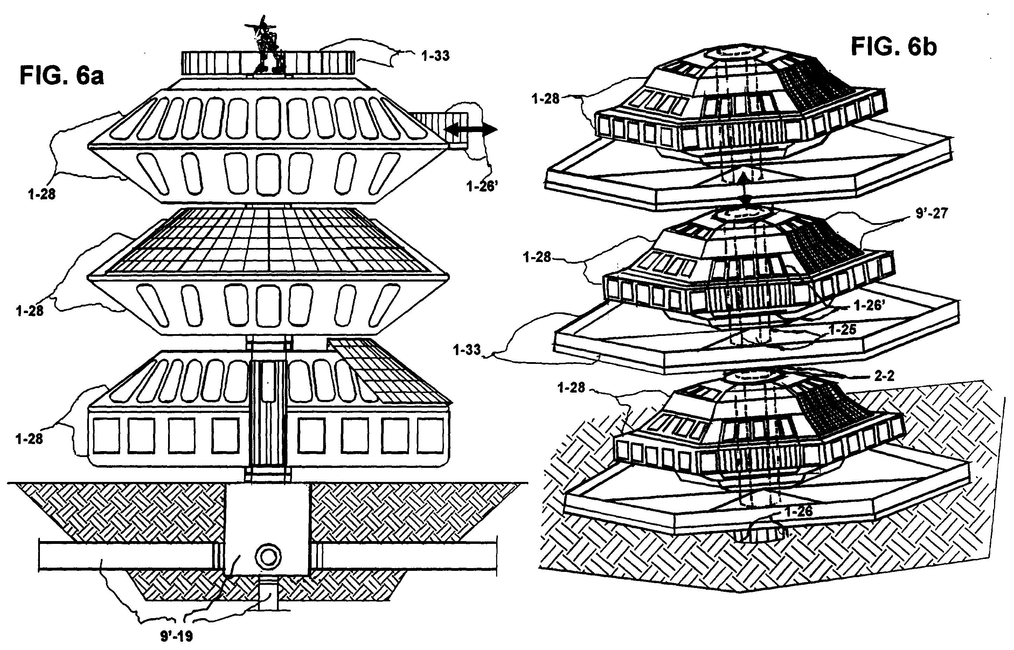

Fig. 6a,b, drei übereinander zusammengesteckte, Multiblock Robot System-Standardzellen mit unterschiedlicher Außenkontour, direkt auf eine bodeninstallierte Versorgungskanal-Flanschaufsteckeinheit aufgesteckt und in Kopfposition mit einer Zwischenplattform-Flanschaufsteckeinheit und einem gelandeten Multiblock Flug-Robot; drei übereinander zusammengesteckte Multiblock Robot System-Standardzellen mit gleicher Aussenkontour und Zwischenplattform-Flanschaufsteckeinheiten;

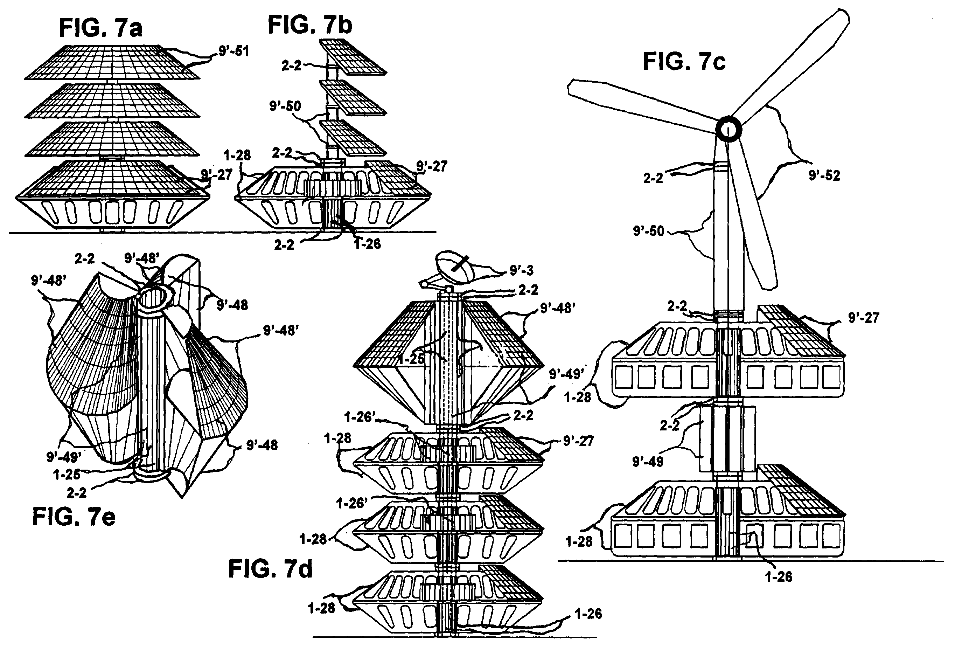

Fig. 7a,b,c,d,e, eine energieautonome Multiblock Robot System-Standardzelle in der Vorderansicht; die energieautonome Multiblock Robot-System-Standardzelle um 90° eingeschwenkt; einen energieautonomen Multiblock Robot Gesamtkomplex mit zwei übereinander aufgesteckten Multiblock Robot System-Standardzellen, in Mittenposition mit einer vertikalen Windrotor-Flanschaufsteckeinheit und in Kopfposition mit einer Windrad-Flanschaufsteckeinheit; einen energieautonomen Multiblock Robot Gesamtkomplex mit drei übereinander aufgesteckten Multiblock Robot Systemzellen und in Kopfposition mit einer vertikalen Wind-Solar Flanschaufsteckeinheit; die Wind-Solar Flanschaufsteckeinheit in perspektivischer Darstellung;

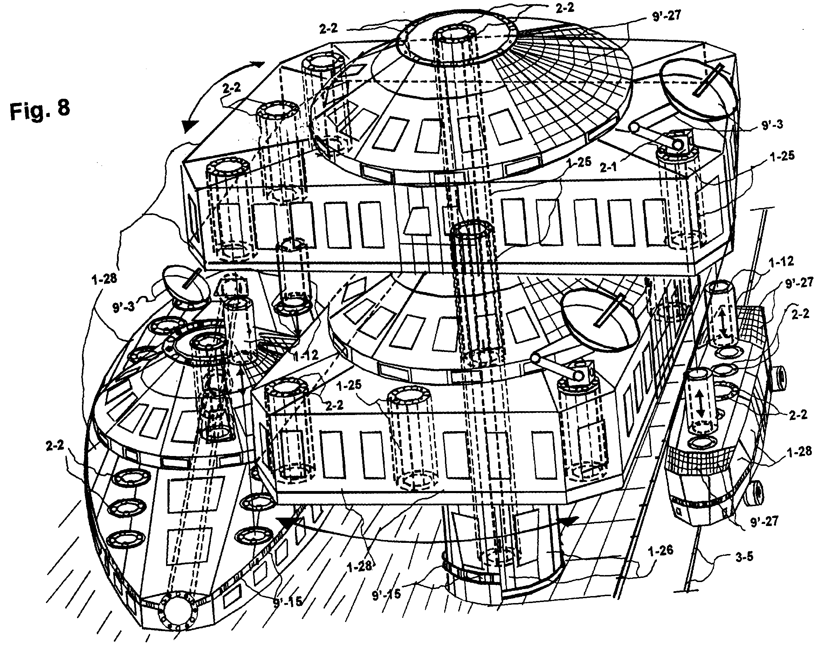

Fig. 8, die perspektivische Darstellung eines Multiblock Robot Hafen-Gesamtkomplexes, mit zwei übereinander aufgesteckten Multiblock Robot System-Standardzellen mit gleicher Außenkontour, wobei die Multiblock Robot System-Standardzelle in Kopfposition um 90° eingeschwenkt ist und zur Mittellinie rechts die bodengebundene Be- und Entladung einer mobilen Multiblock Robot-System-Standardzelle und zur Mittellinie links, die seegebundene Be- und Entladung einer wasserverfahrbaren Multiblock Robot-System-Standardzelle erfolgt;

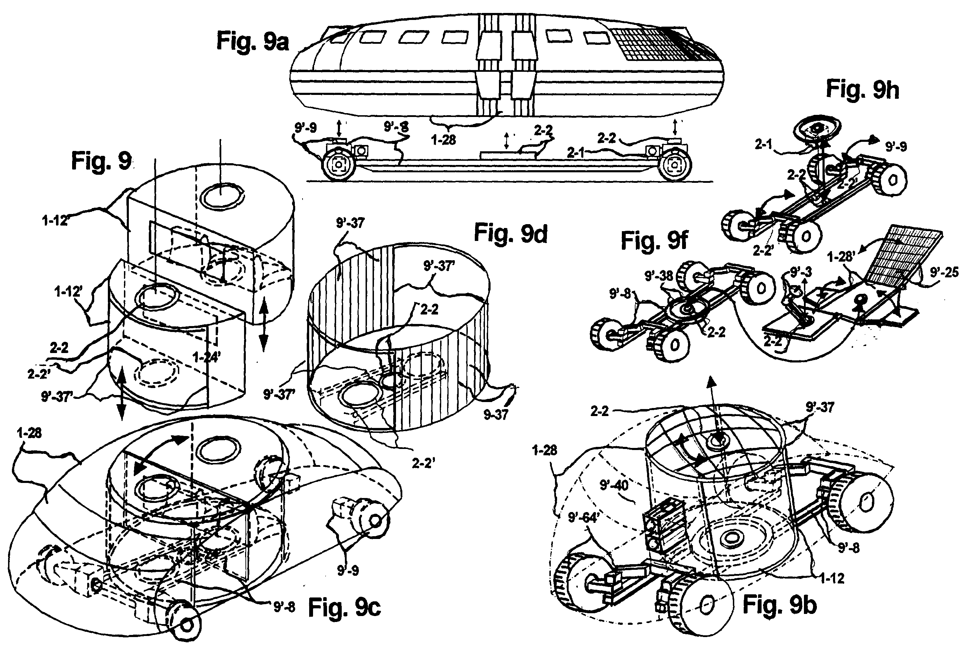

Fig. 9a,b,c,d,e,f, in der Seitenansicht eine straßenverfahrbare Multiblock Robot-System-Standardzelle die auf eine Multiblock Robot E-POOL-Fahrzeugchassis-Flanschaufsteckeinheit aufgesteckt wird und dann einen Multiblock Robot E-POOL Transporter bildet; die perspektivische Ansicht einer straßenverfahrbaren Multiblock Robot System-Standardzelle die auf eine Multiblock Robot E-POOL-Fahrzeugchassis-Flanschaufsteckeinheit aufgesteckt wird und einen Multiblock Robot E-POOL Individual PKW bildet; die herausgezeichnete Innenraumschwenkeinheit; die herausgezeichnete Personenbox und die Beladebox; die perspektivische Ansicht eines Planeten-Bodenfahrzeugs für Piloten, mit Piloten-Sauerstoffbox; die zusammenklappbare Fahrzeugchassis-Flanschaufsteckeinheit eines Planeten-Bodenfahrzeugs für Multiblock Roboter-, die Aufstiegsplattform-Flanschaufsteckeinheit für Multiblock Roboter; die Zusammenklappung der Aufstiegsplattform-Flanschaufsteckeinheit;

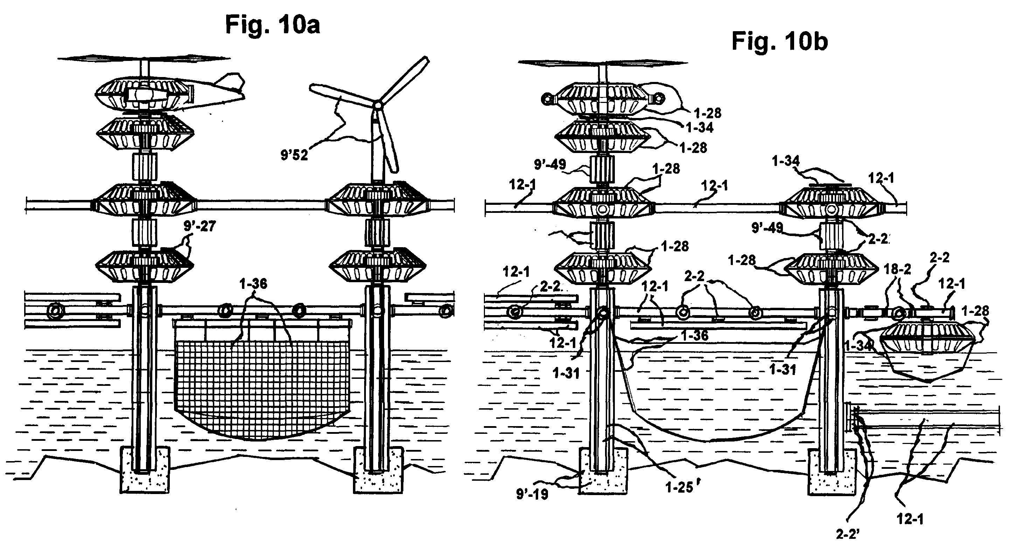

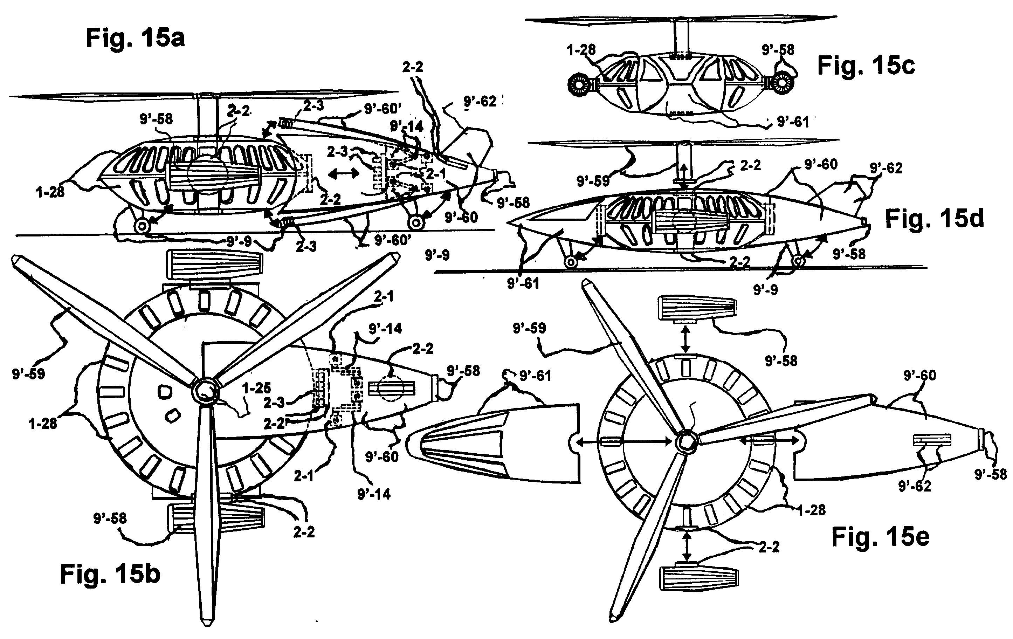

Fig. 10a,b, in der Vorderansicht einen Multiblock Robot See-Gesamtkomplex mit Anwendungsfeld-Flanschaufsteckeinheiten und mit übereinander aufgesteckten, stationären Multiblock Robot-System-Standardzellen und Verbindung zueinander über Multiblock Robot Zugangs-Flanschaufsteckeinheiten, sowie in Kopfposition links, die Landung eines Multiblock Robot Hubschraubers, gemäß der Fig. 15; den Multiblock Robot See-Gesamtkomplex in der Seitenansicht mit Be- und Entladung einer Multiblock Robot Schiffs-Flanschaufsteckeinheit;

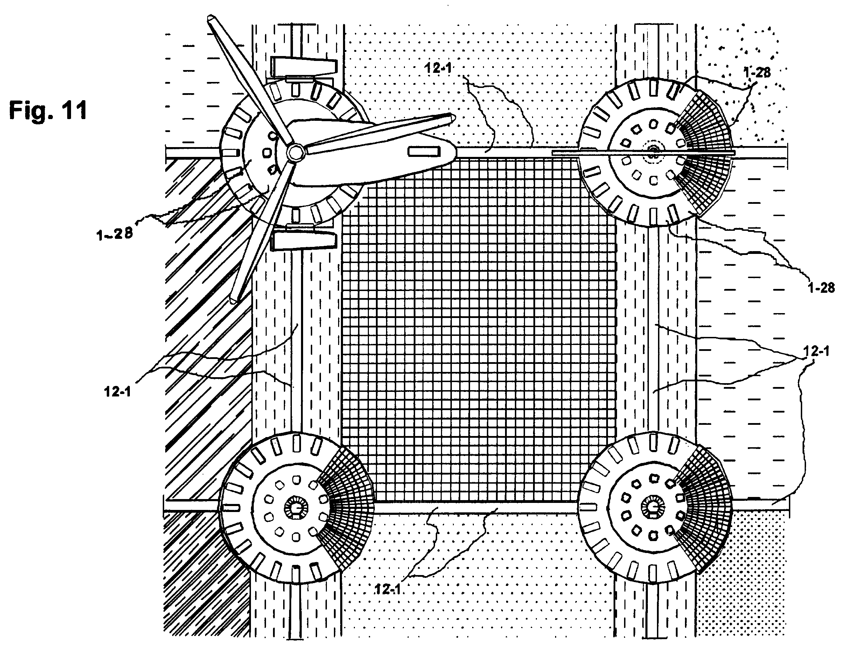

Fig. 11, die Draufsicht auf den Multiblock Robot See-Gesamtikomplex, gemäß der Fig. 10, und Blick auf die Anwendungsfeld-Flanschaufsteckeinheiten;

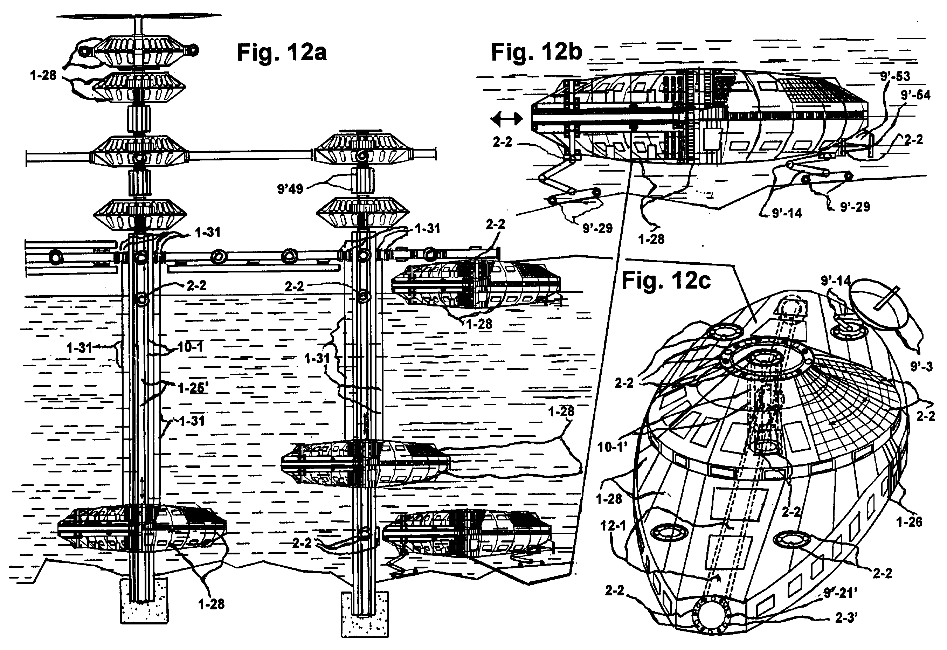

Fig. 12a,b,c,, die Seitenansicht eines Multiblock Robot See-Gesamtkomplexes, gemäß der Fig. 10,11, mit zusätzlichen boden- und seemobilen unter Wasser Multiblock Robot-System-Standardzellen, sowie die Be- und Entladung einer wasserverfahrbaren Multiblock Robot-System-Standardzelle; die boden- und seemobile Unterwasser Multiblock Robot-Systemzelle in vergrößerter Darstellung; die perspektivische Darstellung der wasserverfahrbaren Multiblock Robot-System-Standardzelle;

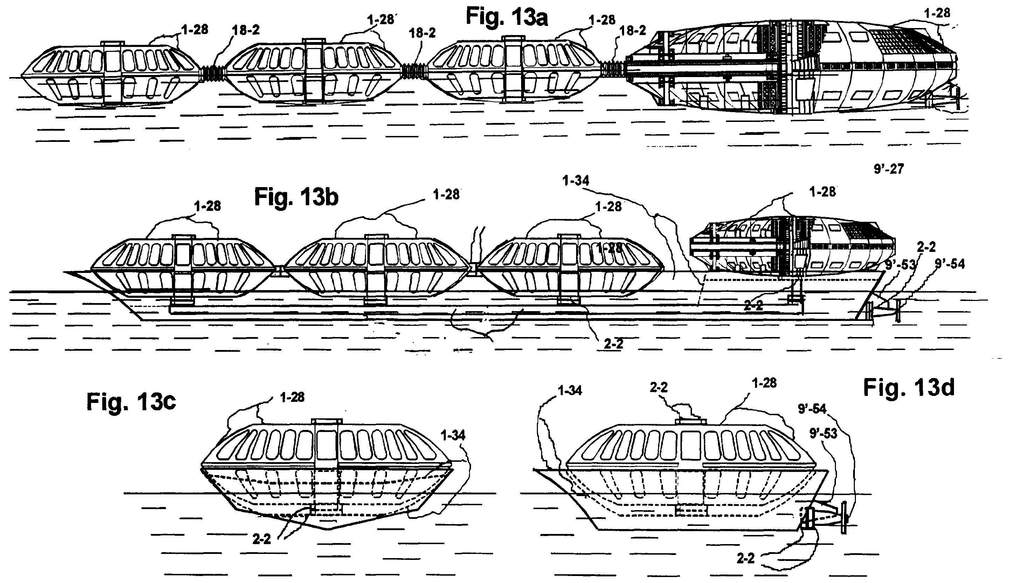

Fig. 13a,b,c,d, in der Seitenansicht vier im Wasser verfahrbare Multiblock Robot-System-Standardzellen, mit drehflexibler Verbindung zu einer Multiblock Robot System-Standardzelle mit Multiblock Robot Ruder- und Vortriebs-Schrauben-Flanschaufsteckeinheit; die vier Multiblock Robot-System-Standardzellen, stationär aufgesteckt auf eine Multiblock Robot Schiffs-Flanschaufsteckeinheit mit Multiblock Robot Ruder- und Vortriebs-Schrauben-Flanschaufsteckeinheit; in der Seitenansicht eine Multiblock Robot System-Standardzelle, stationär aufgesteckt auf eine Multiblock Robot Schiffs-Flanschaufsteckeinheit mit Multiblock Robot Ruder- und Vortriebs-Schrauben-Flanschaufsteckeinheit; die Multiblock Robot Schiffs-Flanschaufsteckeinheit in der Seitenansicht

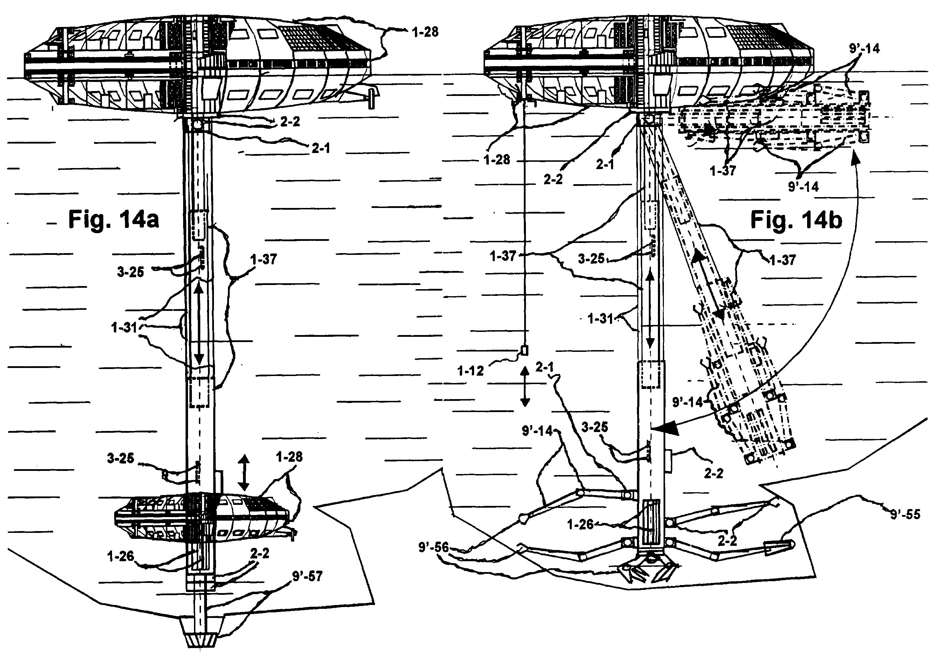

Fig. 14a,b, die Seitenansicht auf eine wasserverfahrbare Multiblock Robot System-Standardzelle mit schwenkbarer unter Wasser Teleskop-Flanschaufsteckeinheiten, die mit Multiblock Robot Greifarmen bestückt ist; die Seitenansicht der wasserverfahrbaren Multiblock Robot-System-Standardzelle mit unter Wasser Teleskop-Flanschaufsteckeinheiten ,gemäß der Fig. 13, mit einer Multiblock Robot Bohrkopf-Flanschaufsteckeinheit und vertikal beweglicher, teleskopgeführter, seemobiler unter Wasser Multiblock Robot System-Standardzelle;
Fig. 15a,b,c,d,e, die Seitenansicht einer Multiblock Robot System-Standardzelle die mit Bodenfahrantrieb-, Vertikalantrieb-, Triebwerks- und rückseitigen Flanschaufsteckeinheiten für den flugtauglichen Hubschraubereinsatz ausgerüstet wird; der zusammengesteckte Multiblock Robot Hubschrauber in der Draufsicht; der zusammengesteckte Multiblock Robot Hubschrauber mit Vorder-und rückseitiger Flanschaufsteckeinheit in der Vorderansicht; der Multiblock Robot Hubschrauber mit vorder- und rückseitiger-Flanschaufsteckeinheit in der Seitenansicht; in der Draufsicht die Zusammensteckung einer Multiblock Robot-System-Standardzelle für den flugtauglichen Hubschraubereinsatz, mit Vertikalantrieb, Triebwerks-, sowie vorder- und rückseitigen Flanschaufsteckeinheiten;

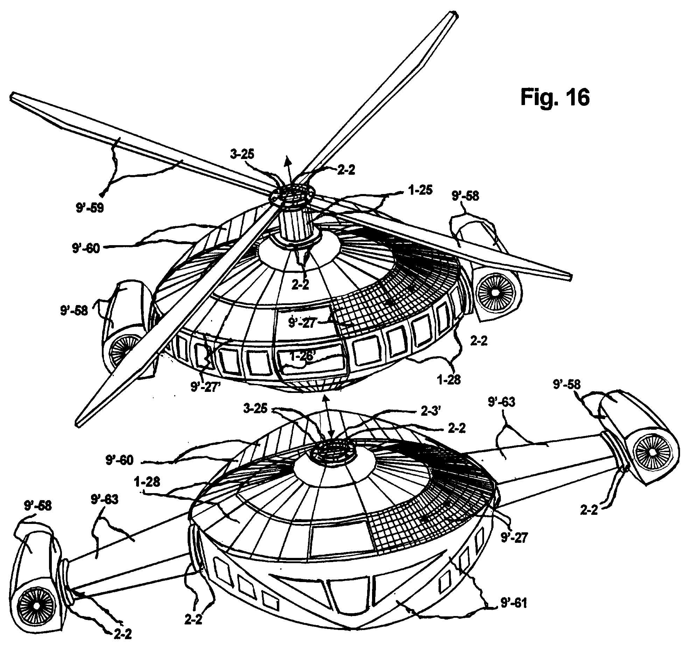

Fig. 16, die perspektivische Ansicht eines Multiblock Robot Hubschraubers mit rückseitiger Flanschaufsteckeinheit und Ankoppelung an ein Multiblock Robot Flugzeug;

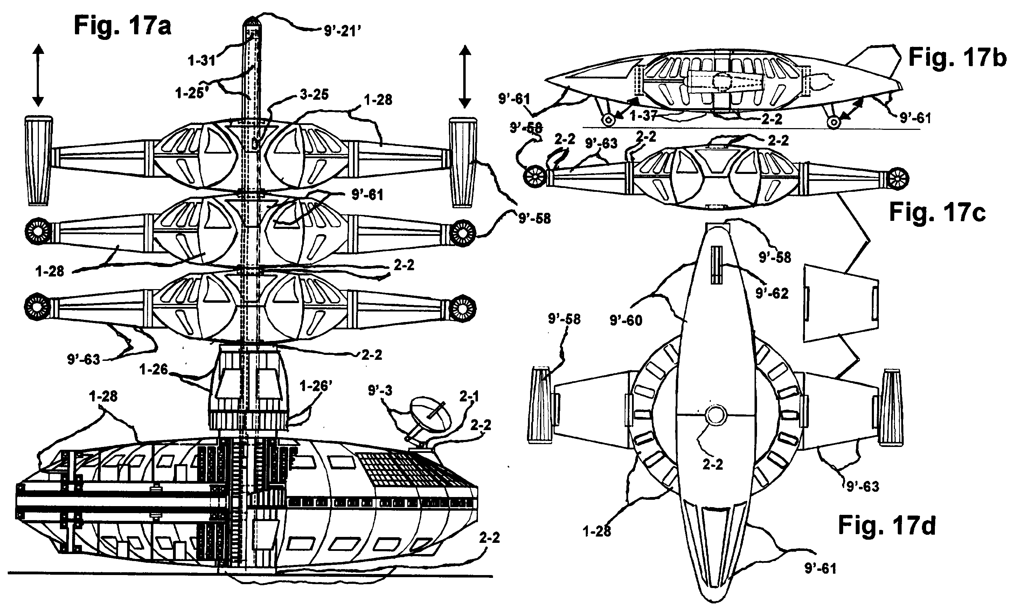

Fig. 17a,b,c,d, die Vorderansicht auf einen Multiblock Robot Fluglande-Start-Komplex, mit separatem, vertikalem Versorgungskanal, sowie einer stationären, bodenaufgesteckten Multiblock Robot-System-Standardzelle, darüber einer Multiblock Robot Dach-Flanschaufsteckeinheit und darüber drei gelandeten, vertikalstartfähigen Multiblock Robot Flugzeugen; ein Multiblock Robot Flugzeug in der Seitenansicht; ein Multiblock Robot Flugzeug in der Vorderansicht; ein Multiblock Robot Flugzeug in der Draufsicht, mit herausgezeichneter Flügel-Flanschaufsteckeinheit;

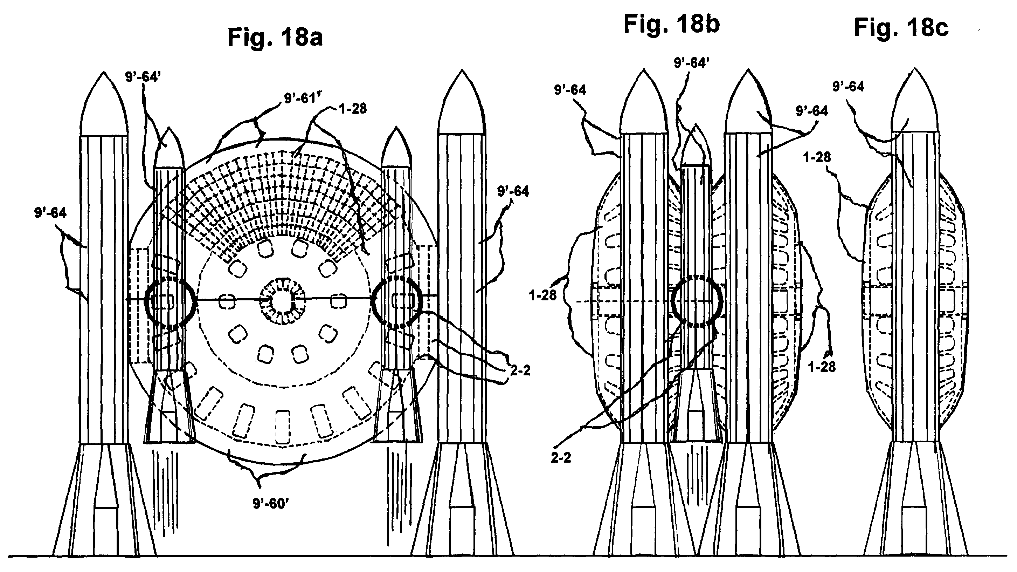

Fig 18a,b,c, die Vorderansicht auf einen Multiblock Robot Raumfahrt-Gesamtkomplex beim Bodenstart mit zentral angeordneten Multiblock Robot-System-Standardzellen, außenseitigen-Multiblockrobot-Startraketen-Flanschaufsteckeinheiten sowie links- und rechtseitigen Raumflug Raketen-Flanschaufsteckeinheiten; die Seitenansicht auf einen Multiblock Robot-Raumstation-Startkomplex mit zwei direkt nebeneinander, zentral angeordneten Multiblock Robot-System-Standardzellen, links und rechtsseitigen Multiblockrobot Startraketen-Flanschaufsteckeinheiten und mittig aufgesteckter zentraler Raumflug Raketen-Flanschaufsteckeinheit; die Seitenansicht auf einen Multiblock Robot Raumstation-Startkomplex mit einer zentral angeordneten Multiblock Robot System-Standardzelle mit rückseitiger Raumflug Raketen-Flanschaufsteckeinheit und Sicht auf die Startraketen-Flanschaufsteckeinheit;

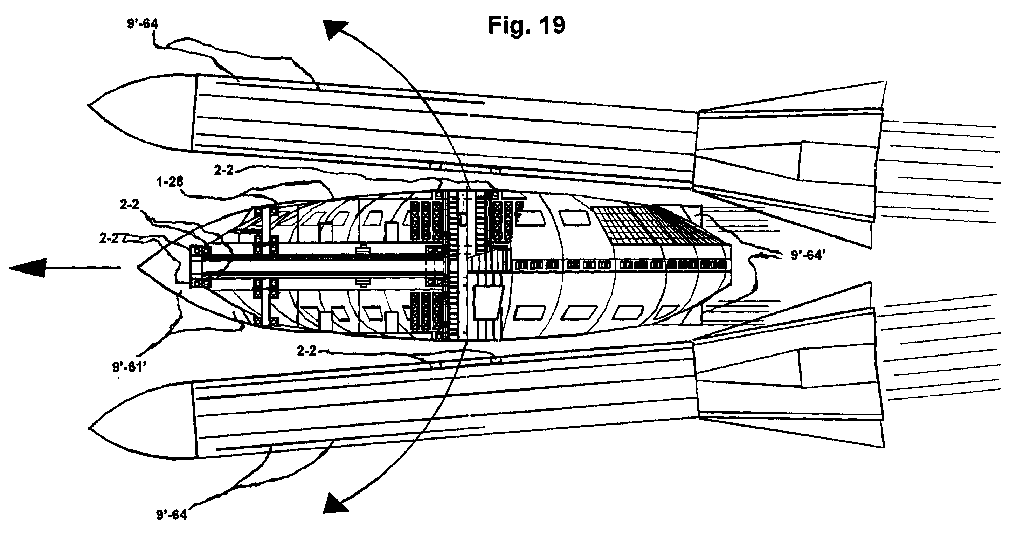

Fig. 19, die Seitenansicht auf einen Multiblock Robot Raumfahrt-Gesamtkomplex während Ausklinkung der Startraketen und Umschaltung auf die rückseitige Raumflug-Raketen-Flanschaufsteckeinheit;

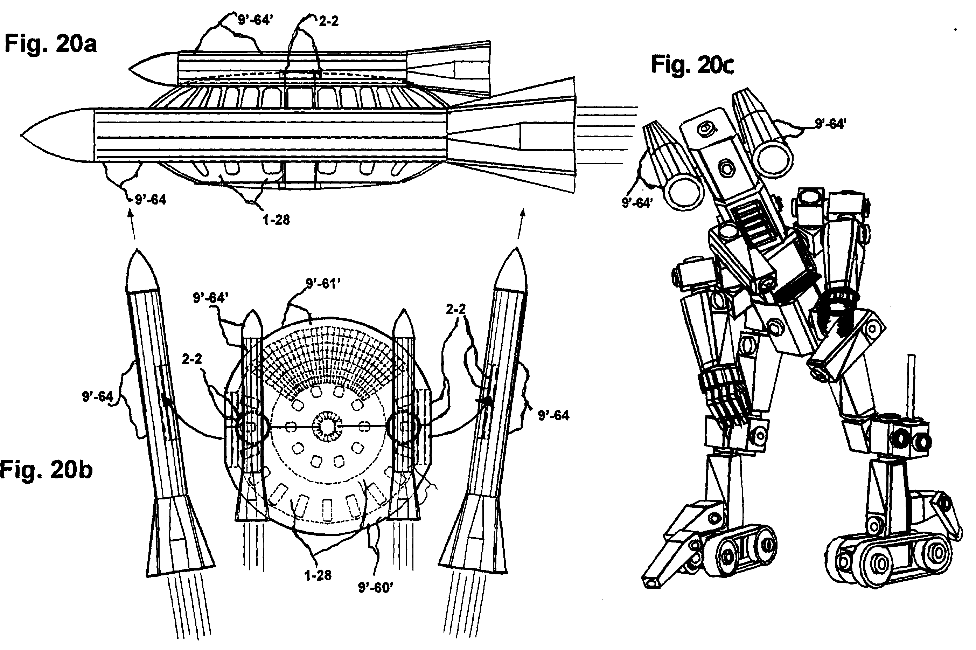

Fig. 20,a,b, die Seitenansicht auf einen Multiblock Robot Raumfahrt-Gesamtkomplex mit außenseitigen Multiblockrobot Startraketen-Flanschaufsteckeinheiten und zentral aufgestecker Raumflug-Raketen-Flanschaufsteckeinheit; die Draufsicht auf einen Multiblock Robot-Raumstation-Flugkomplex während Ausklinkung der außenseitigen Startraketen Flanschaufsteckeinheiten und Umschaltung auf die links- und rechtseitigen Raumflug-Raketen-Flanschaufsteckeinheiten; in der perspektivischen Ansicht einen zugehörigen Multiblock-Weltraum Roboter mit Raumflug-Raketen-Flanschaufsteckeinheiten;

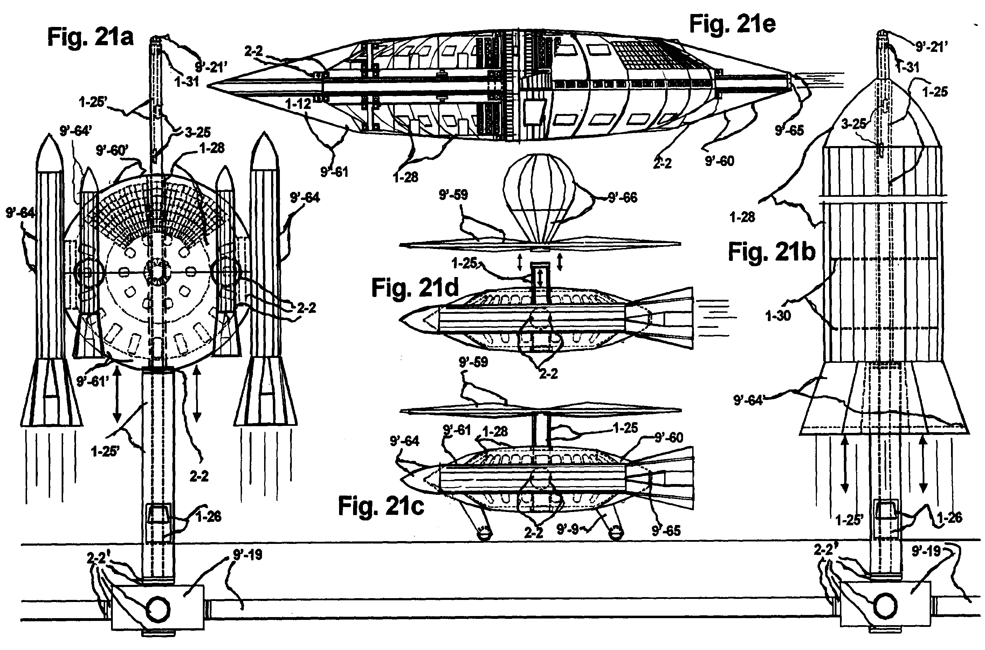

Fig. 21,a,b,c,d,e, die Vorderansicht auf einen Multiblock Robot Raumfahrt-Gesamtkomplex, gemäß der Fig. 18a, jedoch auf einer separaten Zugangskanal-Startrampe; die Vorderansicht auf eine Multiblock Robot Individual Weltraumeinheit, auf einer separaten Zugangskanal-Startrampe; die Seitenansicht eines Multiblock Robot Raumfahrt Gesamtkomplexes, gemäß der Fig. 18c, jedoch mit eigener Vertikal-Hubschraube für den Start aus großen Höhen; den Multiblock Robot-Gesamtkomplex bei Ausklinkung der Vertikal-Hubschraube mit Fallschirm bei Erreichen der Starthöhe; eine Multiblock Robot Raumstation mit eigener Heck-Raketentriebwerks-Flanschaufsteckeinheit;

Bewegungspfeile in den Fig. zeigen die Bewegungsrichtungen der Systemteile an, durchgezogene Linien mit und ohne Ansichtspfeilen von Fig. zu Fig., den Ursprung und die Blickrichtung für herausgezeichnete Unteransichten, Schnitte und Systemdetails der jeweiligen Fig., strichpunktierte Linien die Kontouren eines möglichen Multiblock Robot Zubehörs. Die einzelnen Bezeichnungen und numerischen Indizes werden weitestgehend in Analogie zu den vorstehend benannten Multiblock Robot Patenten und Patentanmeldungen übernommen, bzw. weitergeführt.

### Fig. 1, Fig. 2

Die Multiblock Robot System-Standardzellen 1-28 sind Multiblock-Raumeinheiten die konzeptionell so ausgebildet sind wie die Multiblock Robot- Standardteile und Flanschaufsteckeinheiten gemäß der Basis-Patentschrift U.S. 5,241,875 und der Patentanmeldung U.S. 07/986,532. Sie werden ebenfalls annähernd baugleich zueinander ausgeführt und erhalten zentrale Drehflansch-Steckverbindungen 2-2 mit Strom- und Kommunikationskanälen, die horizontal und vertikal durch die Multiblock Robot System-Standardzellen geführt werden. Die bekannten Strom- und Kommunikationskanäle der Multiblock Robot-Standardteile werden jedoch bei Multiblock Robot System-Standardzellen 1-28, je nach Anforderung, durch Versorgungskanäle 10-1', 9'-40 und Zugangskanäle 12-1,1-25 ersetzt. Dabei nehmen die Versorgungskanäle 10-1' Versorgungsleitungen 10-1 der unterschiedlichsten Art auf, wie Strom- und Kommunikationsleitungen und auch Betriebsmittel-Flüssigkeitszu- und ableitungen auf. Die Versorgungskanäle 10-1' werden je nach Anwendungszielsetzung der Multiblock Robot-System-Standardzellen 1-28, von Flüssigkeitskanälen 9'-40 umgeben, die Wasser, Kraftstoffe, Hydraulikflüssigkeiten und weitere notwendige Betriebsflüssigkeiten enthalten. Die horizontalen Zugangskanäle 12-1 dienen als Personen- und Multiblock Roboter Durchgänge. Sie liegen jeweils im Zentrum der jeweiligen, konzentrisch zueinander angeordneten, Versorgungs- und Durchgangskanäle. Die Zugangskanäle 1-25 sind Vertikalkanäle für Seilzug-Aufzugs- und Hydraulik-Hub-Flanschaufsteckeinheiten 3-25, die für das Heben und Senken von Lasten-, Personen- und Multiblock Robotern vorgesehen sind. Die vertikalen Zugangskanäle 1-25 liegen, wie die horizontalen Zugangskanäle 12-1, jeweils im Zentrum der konzentrisch zueinander angeordneten Versorgungs- und Zugangskanäle. Die vertikalen Zugangskanäle 1-25 für Aufzugseinrichtungen werden, insbesondere bei stationären Multiblock Robot System-Standardzellen 1-28, von Treppenhaus-Einrichtungen 1-25'' umgeben. Die vertikalen Versorgungskanäle 10-1' und Zugangskanäle 1-25 werden von konzentrischen Verschieberingen 1-16 für Material und Vorrichtungen umgeben. Die Multiblock Robot System-Standardzellen 1-28 erhalten Zwischenböden 1-30, Zwischenwände 1-29 mit Schiebetüren 1-24. Die Außenkontour erhält eine Multiblock-Segmentsolar-Flanschaufsteckeinheit 9'-27, Fensteröffnungen 1-24', eine interne Eingangs Flanschaufsteckeinheit 1-26 mit Schiebetüren 1-24 nach außen und nach innen und Zugang zu den horizontalen Zugangskanälen 12-1. Über der internen Eingangs Flanschaufsteckeinheit 1-26 ist eine interne, ausschiebbare Plattform-Flanschaufsteckeinheit 1-26' angeordnet, die nach außen mit einer Brüstung abgedeckt ist. Über die horizontalen Zugangskanäle 1-25 erfolgt der Zugang zu den vertikalen Zugangskanälen 1-25. Hierzu werden in die konzentrischen, vertikalen Versorgungskanäle 10-1',9'-40 und die vertikalen Zugangskanäle 1-25, ebenfalls Schiebetüren 1-24 eingesetzt. Der Zugang von den Zwischenböden 1-30 durch die konzentrischen Verschieberingen 1-16 wird dadurch ermöglicht, daß diese auf ihren Ringbahnen 9'-38 einschwenken und im Bereich der Schiebetüren 1-24 der vertikalen Zugangskanäle 1-25, eine Zugangsöffnung 1-24'' bilden. Der Zugang zu den Zwischenböden 1-30, ist auch von den horizontalen Zugangskanälen 12-1 aus möglich. Hierzu werden in die Seitenwandungen der konzentrisch zueinander liegenden Versorgungskanäle 10-1',9'-40, ebenfalls Schiebetüren 1-24 eingesetzt. Die gesamte Multiblock Robot-Systemzelle 1-28 wird analog zu den Multiblock Robot Standardteilen der eingangs benannten Patentschriften und Patentanmeldungen, in Kopf- und Fußposition auf Drehverbindungen 4-1 gelagert und ist durch die Antriebsmotoren 8-1, den Getriebekranz 25-1, das Antriebsritzel 25-1 der Drehflansch-Steckverbindung 2-2, frei um die Mittelachse und die vertikalen Versorgungs- und Zugangskanäle 10-1',9'-40,1-25 schwenkbar. Trotzdem bleibt in jeder der eingeschwenkten Positionen der Zugriff zu den Versorgungskanälen 10-1',9'-40 und den Versorgungsleitungen 10-1 jederzeit gewahrt. Es werden jedoch auch nicht drehbare Flansch-Steckverbindungen 2-2' in den unterschiedlichen Ausführungsformen, gemäß U.S. Patent 5,850,762 vorgesehen. Die vertikalen und horizontalen Versorgungs- und Zugangskanäle 10-1',9'-40, 12-1,1-25, werden durch Schiebetüren 1-24 abgeschlossen und erhalten ebenfalls analog zu den eingangs benannten Multiblock Robot Patentschriften und Patentanmeldungen in Kopf- und Fußposition und an den horizontalen Ausgängen und an allen Positionen an denen Drehflansch-Steckverbindungen 2-2 oder nicht drehbare Flansch-Steckverbindungen 2-2' vorgesehen sind, Steckerbuchsen 2-3' und Steckereinheiten 2-3, entsprechende Klemm- und Verriegelungsvorrichtungen, für die Steckverbindung zu benachbarten Drehflansch-Steckverbindungen 2-2 und Flanschverbindungen und die Verbindung der Versorgungs- und Zugangsleitungen 10-1 und Kanäle 10-1',1-25,9'-40,12-1 untereinander. Insofern sind die Drehflansch-Steckverbindungen 2-2 und weiteren Flanschverbindungen der Multiblock Robot-System-Standardzellen 1-28 identisch in der Ausführung zu den Multiblock Robot Standardteilen 2-1 gemäß der Fig. 5 und Multiblock Robot Flanschaufsteckeinheiten der eingangs benannten Patentschriften und Anmeldungen. Lediglich die Dimensionierung ist unterschiedlich. Die Versorgungskanäle 10-1' werden als horizontale Ringkörper mit Ring-Innen- und Außenwand ausgeführt, wobei die Versorgungsleitungen 10-1 in den Ringkörper eingesetzt werden, oder aber der Ringkörper mit Innen- und Außenwand selbst als Versorgungsleitung 10-1 dient und u.a. Flüssigkeiten weiterleitet. Die Versorgungskanäle werden alternativ nur aus ringförmig zueinander eingesetzten Versorgungsleitungen 10-1, ohne Ring-Innen- und Außenwand gebildet und auch in eine ringförmige Vollwand und in Abständen zueinander eingesetzt, wie in den Fig. 1,2, dargestellt. Die eingesetzten Versorgungsleitungen 10-1 haben in der Endposition Steckereinheiten 2-3 und Steckerbuchseneinheiten 2-3', die von Dichtungsmaterial 2-3'' ummantelt sind und konisch so ausgebildet sind, daß beim Zusammenstecken ein Zentrierungseffekt die jeweils gegenüberliegenden Drehflansch-Steckverbindungen 2-2 leicht zusammenfügen läßt. Gleichzeitig sorgt die Ummantelung mit dem Dichtungsmaterial 2-3'' für eine sichern Abdichtung der Versorgungsleitungen 10-1 an der Verbindungsübergangsstelle der Versorgungsleitungen 10-1 und der Steckereinheiten 2-3 und Steckerbuchseneinheiten 2-3' durch das Zusammenstecken der miteinander verbunden Versorgungskanäle. Die Steckereinheiten 2-3 und Steckerbuchseneinheiten 2-3' die auf dem Umfang der Drehflansch-Steckverbindungen 2-2 nur für die Zentrierung der Drehflansch-Steckverbindungen 2-2 zueinander eingesetzt sind, werden in gleicher Weise wie die Steckereinheiten 2-3 und Steckerbuchseneinheiten 2-3' ausgeführt, die die Versorgungsleitungen 10-1 in den Versorgungskanälen 10-1' miteinander verbinden. Die in der Fig. 2c dargestellten Näherungs-Sensor Flansch-Aufsteckeinheiten 9'-21 sorgen für die Ausrichtung der zusammenzusteckenden Drehflansch-Steckverbindungen 2-2, mit den innenliegenden Versorgungskanälen 10-1' und Versorgungsleitungen 10-1. Hier ist mittig eine Versorgungsleitung 10-1 mit Strom- und Kommunikationsleitungen 3-1 vorgesehen und rechts, sowie links dazu, jeweils eine Versorgungsleitung 10-1 für Flüssigkeiten. Die Multiblock Robot-System-Standardzellen 1-28 werden aus Standardzellen-Teilsegmenten 1-27, gemäß der Fig. 3b, zusammengesteckt und sind ihrerseits an den Aufsteckseiten und an den Enden, zur Verbindung mit den Drehflansch-Steckverbindungen 2-2, mit Steckereinheiten 2-3 und an den jeweils gegenüberliegenden Seiten, mit Steckerbuchseneinheiten 2-3' ausgerüstet. Außerdem werden durch die obere und untere Wandung Versorgungsleitungen 10-1 geführt, die identisch zu dem Aufsteckdetail gemäß der Fig. 2c, beim Zusammenstecken der einzelnen Standardzellen-Teilsegmente 1-27 zu einer Multiblock Robot-System-Standardzelle 1-28 geschlossen werden und Versorgungsringleitungen 10-1 an der Peripherie, oberhalb und unterhalb der Multiblock Robot-System-Standardzelle 1-28 bilden. Die so gebildeten Versorgungsringleitungen 10-1 haben in Abständen zueinander vertikale Verbindungsleitungen 10-1 zu den horizontalen Versorgungsleitungen 10-1, die die horizontalen Zugangskanäle 12-1 umgeben. Die Versorgungs- 10-1',9'-40 und Zugangskanäle 1-12,1-25 und die Standardzellen-Teilsegmenten 1-27 erhalten an ihrem Umfang im Bereich der Zusammenfügepositionen konische Dichtungsringe mit dem Dichtungsmaterial 2-3'' gemäß und analog der Fig. 2b.

### Fig. 3,

Die nebeneinander und übereinander zusammengesteckten Multiblock Robot-System-Standardzellen 1-28 werden im vorliegenden Ausführungsbeispiel an den Verbindungsübergängen der Drehflansch-Steckverbindungen 2-2 durch drehflexiblen Flanschaufsteckeinheiten 18-2 verbunden. Die Multiblock Robot-System-Standardzellen 1-28 sind unter Zwischensetzung der drehflexiblen Flanschaufsteckeinheiten 18-2 auf die separate Multiblock Robot Standard-Eingangs-Flanschaufsteckeinheit 1-26 aufgesteckt. Diese ist über Drehflansch-Steckverbindungen 2-2 mit Fundament-Flanschaufsteckeinheiten 9'-19 verbunden, und mit den darin geführten Versorgungsleitungen. Die Fundament-Flanschaufsteckeinheiten 9'-19 sind in Beton eingegossene und auch frei unter Boden verlegte Versorgungskanäle die ihrerseits Versorgungsleitungen 10-1 führen und in Endposition Drehflansch-Steckverbindungen 2-2 und nicht drehbare Flansch-Steckverbindungen 2-2' aufweisen. Die Fundament-Flanschaufsteckeinheit 9'-19, auf der die Multiblock Robot Eingangs-Flanschaufsteckeinheit 1-26 und die darüberangeordneten Multiblock Robot System-Standardzellen 1-28 aufgesteckt sind, ist ein Fundament-Betonblock mit integrierten Versorgungskanälen, von dem in beliebigen Richtungen über nicht drehbare Flanschverbindungen 2-2' frei verlegte Versorgungskanäle mit integrierten Versorgungsleitungen 10-1 abgehen, wie Abwasserleitungen, Trinkwasserleitungen, Kraftstoffleitungen, Strom- und Kommunikationsleitungen. In Kopfposition ist eine separate Multiblock Robot Standard-Dach-Flanschaufsteckeinheit 1-32 aufgesteckt, die bis auf die unterschiedlichen Einrichtungen, identisch mit der separaten Eingang-Flanschaufsteckeinheit 1-26 ist und nach oben mit Schiebetüren 1-24' die dort vorgesehene Drehflansch-Steckverbindung 2-2 und die Versorgungs- und Zugangskanäle 10-1',1-25, abschließt. In dieser Position sind Multiblock-Robot Hub-Flanschaufsteckeinheiten 1-31 aufgesteckt. Die drehflexiblen Flanschaufsteckeinheiten 18-2 erhalten ebenso wie die Standard-Eingangs-Flanschaufsteckeinheit 1-26 und die Standard-Dach-Flanschaufsteckeinheit 1-32, Versorgungs- und Zugangskanäle 10-1',9'-40,12-1,1-25, Treppenhaus-Einrichtungen 1-25'' und Versorgungsleitungen 10-1 in identischer Position zu den Versorgungs- und Zugangskanälen 10-1',9'-40,12-1,1-25, Treppenhaus-Einrichtungen 1-25'' und Versorgungsleitungen 10-1, der Multiblock Robot-System-Standardzellen 1-28, so daß nach dem Zusammenstecken eine durchgehende Verbindung der Versorgungsleitungen 10-1 untereinander erfolgt und ein durchgehender Übergang der einzelnen Versorgungs- und Durchgangskanäle 10-1',9'-40,12-1,1-25 und Treppenhaus-Einrichtungen 1-25'' entsteht der nur durch optionale Einrichtung von Schiebetüren 1-24 unterbrochen wird. Die drehflexiblen Flanschaufsteckeinheiten 18-2 erhalten Versorgungsleitungen 10-1 und Durchgangskanäle 12-1,1-25 in dreh- zug und biegeflexiblen Kunststoffen. Die Seilzug- und Hydraulik-Flanschaufsteckeinheiten 3-25 werden nach dem Zusammenstecken des Multiblock-Robot Gesamtkomplexes, Ober Hubseile und auch hydraulische Teleskop-Hubplattformen mit den einzelnen Multiblock-Robot Hub-Flanschaufsteckeinheiten 1-31 verbunden und über die gesamte Höhe des Zugangskanals 1-25, von der Standard Eingang-Flanschaufsteckeinheit 1-26 bis zur Standard Dach-Flanschaufsteckeinheit 1-32 angehoben, bzw. abgesenkt.. Ebenso ist ein durchgehender Übergang von einer konzentrischen Treppenhaus-Einrichtung 1-25'' bis zum nächsten darüberliegenden, durch das Zusammenstecken der einzelnen Bauteile gewährleistet. Jeweils an der Peripherie, unter 90° zueinander, sind vier mehrachsige Multiblock Robot Gelenkarme 9'-14 vorgesehen, die mit Hydraulik Flanschaufsteckeinheiten gemäß der Patentanmeldung U.S. 09/298,204 ausgerüstet sind. Die Mehrachsigen Gelenkarme 9'-14 reagieren über seismische Sensor-Flanschaufsteckeinheiten 9'-21 selbstoperierend auf seismische Veränderungen. Sie fangen Erdbewegungen durch Erdbeben sicher auf, haben Stoßdämpfereffekt und haften den Multiblock Robot Gesamtkomplex auch bei plötzlichen Erdabsenkungen in annähernd horizontaler Lage. Durch die drehflexiblen Flanschaufsteckeinheiten 18-2 werden überdies Stöße und Bewegungen die an einer Multiblock Robot-System-Standardzelle 1-28 wirksam werden, nicht auf die benachbarten Zellen übertragen, sondern durch die drehflexiblen Flanschaufsteckeinheiten 18-2 abgefangen. Insofern eignet sich die Ausführung gemäß der Fig. 3 nicht nur für Erdbebengebiete, in Sturmschadensgebieten oder und bei unsicheren Bodenverhälntissen, sondern auch für Einrichtungen unter Wasser, bei schwierigen Strömungsverhältnissen und für die Einrichtung auf anderen Planeten.

### Fig. 4,

Die Multiblock Robot-System-Standardzellen 1-28 können unterschiedliche Außenkontouren aufweisen und je nach Anwendungsfall unterschiedliche Innen- und Außeneinrichtungen aufnehmen. Die vorliegenden Ausführungsbeispiele gemäß Fig. 4a,4b, sind prinzipiell identisch. Der Gesamtkomplex, gemäß der Fig. 4a, hat jedoch eine mehr kugelförmige Außenkontour und der Gesamtkomplex, der Fig. 4b, mehr eine scheibenförmige Außenkontour. Außerdem ist für diesen Gesamtkomplex eine Dach-Flanschaufsteckeinheit 1-32 zwischen die zwei Multiblock Robot-System-Standardzellen 1-28 gesetzt, während die drei Multiblock Robot-System-Standardzellen 1-28, gemäß der Fig. 4a, direkt übereinander aufgesteckt sind. Die zwischengesetzte Dach-Flanschaufsteckeinheit 1-32 nimmt im Außenbereich zusammensteckbare Multiblock Robot Batterieeinheiten 9'-6 auf, die als Energie-Zwischenspeicher des Multiblock Robot-Gesamtkomplexes und für die Batterieaufladung von Multiblock-Robotern, durch die Solar-Flanschaufsteckeinheiten 9'-27 an der Außenkontour der Multiblock Robot-System-Standardzellen 1-28, aufgeladen werden. Für die vorliegenden Multiblock Robot-Gesamtkomplexe wurde keine vertikale Treppenhaus-Einrichtung 1-25'' vorgesehen, sondern lediglich der Aufzugskanal 1-25. Die Versorgungsleitungen 10-1 sind hier in die Außenwandungen des Aufzugskanals 1-25 eingesetzt, der somit gleichzeitig als Versorgungskanal 10-1' dient und enden in Kopf- und Fußposition in Steckverbindungen der Drehflansch-Steckverbindungen 2-2. Die einzelnen Multiblock Robot-System-Standardzellen 1-28 haben zwei Zwischenböden und keine Trennwände, so daß durchgehende Rundum-Raumeinheiten im Innenraum entstehen. Jeder Zwischenboden ist mit Positions- und Richtungscode Bahnführungen 3-5 für die schnelle Orientierung und Positionierung von Multiblock Robotern gemäß der Patentanmeldung U.S. 09/298,204 ausgeführt. Jede Multiblock Robot-System-Standardzelle 1-28 erhält darüberhinaus jeweils zwei konzentrischen Verschieberinge 1-16 die auf ihren kreisförmigen Bahnführungen 9'-38 gemäß der Fig. 2b mit den Multiblock Robot Fahrantriebseinheiten 9'-39 separat verfahren und zueinander eingeschwenkt werden.

### Fig. 5

Die Multiblock Robot System-Standardzellen 1-28 sollen auf der Erde, unter Wasser, in der Flug- und Raketentechnik und im Weltraum eingesetzt werden und für die unterschiedlichsten Anwendungen mit entsprechenden Zusatzausrüstungen, bestehend aus Flanschaufsteckeinheiten und Sub-Standardzellen kombiniert werden. Gleichzeitig sollen sie jedoch auch zu den Multiblock Robotern kompatibel sein und die Multiblock-Robot Systemumgebung noch effektiver gestalten. Hierzu werden die Multiblock Roboter mit flugtechnischen- und unter Wasser Vortriebs-Flanschaufsteckeinhelten ausgerüstet, so daß sie jederzeit leicht Zugang zu den Multiblock Robot-System-Standardzellen 1-28 haben, gleich unter welchen Umweltbedingungen diese eingesetzt sind. Für die flugtechnische Ausführung werden Multiblock Robot Standardteile 2-1 vorgesehen, die über der Kopf einheit angeordnet und aufgesteckt werden und bei reinem Bodenbetrieb für die Antennen-Flanschaufsteckeinheit 9'-3 oder Solar-Flanschaufsteckeinheiten vorgesehen ist. Das aufgesetzte Multiblock Robot Standardteil 2-1 wird mit Multiblock Robot Vertikalrotor-Flanschaufsteckeinheiten 9'-41 und Triebwerks-Flanschaufsteckeinheiten 9'-42 ausgerüstet, die auf die horizontalen und vertikalen Drehflansch-Steckverbindungen 2-2 aufgesteckt werden. Außerdem werden in dem Multiblock Robot Standardteil 2-1 über der Kopfeinheit, Kraftstoffkanäle vorgesehen. Alternativ oder zusätzlich zu dieser Ausrüstung wird unter Fig. 5b das Multiblock Robot Standardteil 2-1 unterhalb der Computereinheit auf die hintere, horizontalen Drehflansch-Steckverbindung 2-2 eine Multiblock Robot Steuerungs-Flanschaufsteckeinheit 9'-43 aufgesteckt, die eine separate Steuereinheit für die Triebwerks-Flanschaufsteckeinheiten 9'-42 aufnehmen, die mittig zu den Triebwerks-Flanschaufsteckeinheiten 9'-42 aufgesteckt ist. Unter der Steuerungs-Flanschaufsteckeinheit 9'-43 ist auf die zugehörige vertikale Drehflansch-Steckverbindung 2-2, eine separate Kraftstoffkanal-Flanschaufsteckeinheit 9'-47 aufgesteckt. Die Antennen-Flanschaufsteckeinheit 9'-3 wird auf das Multiblock Standardteil 2-1 umgesteckt, das über der Multiblock-Robot Gurt-Fahrantriebseinheit angeordnet ist. Für den unter Wasser Vortrieb wird die Einrichtung gemäß Fig. 5c ausgeführt. Hierbei werden auf das Multiblock Robot Standardteil 2-1 eine separate Kraftstoffkanal-Flanschaufsteckeinheit 9'-47 aufgesteckt und auf deren Drehflansch-Steckverbindungen 2-2, links und rechts zugeordnet, je eine unter Wasser-Rotor-Flanschaufsteckeinheit 9'-44 aufgesteckt. Statt der Kraftstoffkanal-Flanschaufsteckeinheit 9'-47 wird alternativ auch eine Multiblock-Robot Batterie-Flanschaufsteckeinheit 9'-6, gemäß dem Multiblock-Robot Patent U.S. 5,850,762, als Antriebseinheit vorgesehen. Multiblock Roboter können sowohl mit flugtechnischen- Triebwerks-Flanschaufsteckeinheiten 9'-42 und gleichzeitig unter Wasser-Rotor-Flanschaufsteckeinheiten 9'-40, als auch mit bodenverfahrbaren Gurtfahrwerken ausgerüstet werden, so daß sie ohne das Aufstecken bzw. die Abnahme der entsprechenden Flanschaufsteckeinheiten, auf dem Boden, unter Wasser und in der Luft aktiv sein können. Für Weltraum-Zielvorgaben werden die Multiblock-Roboter mit Raketen-Flanschaufsteckeinheiten 9'-41, gemäß der Fig. 20c, sowie den zugehörigen Kraftstoff-Flanschaufsteckeinheiten 9'-43 und mit Geh- oder Fahr-Flanschaufsteckeinheiten ausgerüstet.

### Fig. 6

Der bodenstationäre Multiblock Robot Gesamtkomplex umfaßt drei übereinander angeordnete Multiblock Robot-System-Standardzellen 1-28 gemäß der Fig. 6a. Diese sind jeweils um 90° zueinander eingeschwenkt. Sie sind konzeptionell zueinander identisch, lediglich die unterste Multilblock Robot-System-Standardzelle 1-28 ist in der äußeren Kontour unterschiedlich zu den beiden darüber angeordneten Multiblock Robot-System-Standardzellen 1-28. Die in oberster Position angeordnete Multiblock Robot-System-Standardzelle 1-28 zeigt die teilausgeschobene ausschiebbare Plattform-Flanschaufsteckeinheit 1-26'. In Kopfposition ist eine Landeplattform-Flanschaufsteckeinheit mit Brüstung 1-33 aufgesteckt und ein Multiblock-Flugroboter gelandet. Der Multiblock-Flugroboter wird über eine Hyraulik Flanschaufsteckeinheit 3-25 innerhalb des vertikalen Zugangskanals 1-25 in die Multiblock Robot-System-Standardzellen 1-28 abgesenkt. Die drei übereinander angeordneten Multiblock Robot-System-Standardzellen 1-28, gemäß der Fig. 6a, haben gegenüber den Multiblock Robot-System-Standardzellen 1-28, gemäß der Fig. 6b, eine gänzlich andere Kontour, sind jedoch konzeptionell zueinander identisch. Für jede der Multiblock Robot-System-Standardzellen 1-28 ist hier eine begehbare Personenplattform-Flanschaufsteckeinheit 1-33' mit Brüstung aufgesteckt.

### Fig. 7

Die in Bodenposition der Fig. 7a aufgesteckte Multiblock Robot-System-Standardzelle 1-28 ist identisch mit den Multiblock Robot-System-Standardzellen 1-28 in Kopf- und Mittenposition der Fig. 6a. Über dieser Multiblock Robot-System-Standardzelle 1-28 sind drei schwenkbare Solar-Flanschaufsteckeinheiten 9'-51 aufgesteckt, die über die Zugangs- und Versorgungskanal-Flanschaufsteckeinheiten 9'-50, jeweils mittels eigener Drehflansch-Steckverbindungen 2-2 übereinander aufgesteckt sind. Die Zugangs- und Versorgungskanal-Flanschaufsteckeinheiten 9'-50 haben dieselbe Ausführungscharakteristik wie die Durchgangskanäle 1-25 der Fig. 1 und erhalten Versorgungsleitungen 10-1. Die Segment-Solar-Flanschaufsteckeinheiten 9'-51 sind ausführungsidentisch zu den schwenkbaren Segmentsolar-Flanschaufsteckeinheiten 9'-27. Zwischen den beiden Multiblock Robot-System-Standardzellen 1-28 der Fig. 7c ist eine Multiblock-Vertikal-Windrotor Flanschaufsteckeinheit 9'-49 aufgesteckt und in Kopfposition ist eine Multiblock-Windrad Flanschaufsteckeinheit 9'-25 aufgesteckt, gemäß dem U.S. Patent 5,852,353. Der Multiblock Robot Gesamtkomplex, gemäß der Fig. 7d, mit den drei übereinander aufgesteckten Multiblock Robot-System-Standardzellen 1-28, trägt in Kopfposition vertikale Multiblock-Solar-Wind Flanschaufsteckeinheit 9'-49' und darüber ist eine Multiblock-Robot Antennen Flanschaufsteckeinheit 9'-3 aufgesteckt. Die Solar-Wind Flanschaufsteckeinheit 9'-49' trägt auf den konischen Oberseiten der drei vertikalen Wind-Rotorblatt-Flanschaufsteckeinheiten 9'-48, die Solar-Flanschaufsteckeinheiten 9'-48'. Hierdurch ist es möglich Strom durch die Solar-Flanschaufsteckeinheiten 9'-48' und die vertikalen Wind-Rotorblatt-Flanschaufsteckeinheiten 9'-52', von Sonne und Wind gleichzeitig zu erhalten, oder aber nur durch Wind, oder nur durch Sonne, je nach vorherrschendem Wetter, und während der Tag- oder Nachtzeit und den Strom über den inneren, vertikalen Versorgungskanal 10-1' den darunter angeordneten Multiblock Robot-System-Standardzellen 1-28 zuzuleiten.

### Fig. 8,

Dieser Multiblock Robot Gesamtkomplex ist an einem Hafenkai angeordnet. Die zwei übereinander angeordneten Multiblock Robot System-Standardzellen 1-28 haben eine rechwinklige Kontour, mit darauf aufgesteckter schwenkbarer Segmentsolar-Flanschaufsteckeinheit 9'-27, der auf die zentrale, konische Dachkontour aufgesteckt ist. Die zentrale, konische Dachkontour ist mit einer eigenen Drehflansch-Steckverbindung 2-2 in Kopfposition ausgeführt. Hier kann eine weitere Multiblock Robot System-Standardzelle 1-28 aufgesteckt werden, oder andere Multiblock Robot System-Standardzellen 1-28, die durchmesserkompatible Drehflansch-Steckverbindungen 2-2 oder Flanschaufsteckeinheiten besitzen. Zentral befindet sich der Zugangskanal 1-25, der in Kopfposition ebenfalls mit einer eigenen Drehflansch-Steckverbindung 2-2 abschließt, die andere, durchmesserkompatible Drehflansch-Steckverbindungen 2-2, bzw. Flanschaufsteckeinheiten aufnehmen kann. Jeweils an den kurzen Außenseiten sind Zugangskanäle 1-25 vorgesehen, die in Kopf- und Fußposition ebenfalls Drehflansch-Steckverbindungen 2-2 aufweisen. Die Seilzug- und Hydraulik-Flanschaufsteckeinheiten 3-25 in den seitlichen Zugangskanälen 1-25 sind für die Entnahme von Multiblock Kühlbox-Flanschaufsteckeinheiten 1-12 und auch Multiblock Robotern gemäß der Patentanmeldung U.S. 09/298,204 vorgesehen. Die in Kopfposition aufgesteckte Multiblock Robot-System-Standardzelle 1-28 übernimmt von dem Multiblock Robot E-POOL Transporter und dessen Multiblock Robot-System-Standardzelle 1-28, die Kühlbox-Flanschaufsteckeinheiten 1-12 bzw. senkt diese zur Übergabe an die Multiblock Robot-System-Standardzelle 1-28 ab. Der Multiblock Robot E-POOL Transporter wird über Positions- und Richtungscode Bahnführungen 3-5 selbstoperierend für die Abgabe und Aufnahme der Kühlbox-Flanschaufsteckeinheiten 1-12 positioniert. Auf der linken Seite werden die Kühlbox-Flanschaufsteckeinheiten 1-12 an eine Multiblock Robot Schiffseinheit und die zugehörige Multiblock Robot-System-Standardzelle 1-28 abgegeben. Die Multiblock Robot Schiffseinheit wird über die eigene Näherungssensorring-Flanschaufsteckeinheiten 9'-15 an der Außenkontour und den Sensor-Signalaustausch mit den Näherungssensoning-Flanschaufsteckeinheiten 9'-15 an der Außenkontour der Eingangs-Flanschaufsteckeinheit 1-26 selbstoperierend für die Abgabe und Aufnahme der Kühlbox-Flanschaufsteckeinheiten 1-12 positioniert. Für die Aufnahme und Abgabe der Kühlbox-Flanschaufsteckeinheiten 1-12 der in Kopfposition aufgesteckten Multiblock Robot System-Standardzelle 1-28, wird die untere Multiblock Robot System-Standardzelle 1-28 um 90° eingeschwenkt, so daß die obere Multiblock Robot System-Standardzelle 1-28 be- und entladen kann. Wenn die untere Multiblock Robot System-Standardzelle 1-28 be- und entladen werden soll, wird sie ebenfalls um 90° in Richtung der Multiblock Robot Schiffseinheit bzw. des Multiblock Robot E-POOL Transporters eingeschwenkt. Die bodenstationären Multiblock Robot Gesamtkomplexe und auch individuale Installationen von Multiblock Robot System-Standardzellen 1-28, werden für allgemeine Anwendungen wie Produktions, Büro, Labor, Wohnzwecke, Hotels, Restaurants, für spezifische Anwendungen wie Fernsehstationen und Astro-Forschungen, Multiblock Robot E-POOL Computer-Zentren, mit den jeweils notwendigen Inneneinrichtungen und im Außenbereich mit zusätzlichen Multiblock Robot Flanschaufsteckeinheiten ergänzt.

### Fig. 9,

Die Multiblock Robot E-POOL Transporter werden konzeptionell wie die E-POOL Individual PKW's ausgeführt. Die auf die Fahrzeugchassis-Flanschaufsteckeinheit 9'-8 aufgesteckte Multiblock Robot-System-Standardzelle 1-28 ist in der Kontour ähnlich wie die Großraum Multiblock Robot-System-Standardzelle 1-28, gemäß der Fig. 1, sie ist jedoch in der Breite schmaler ausgelegt, für den uneingeschränkten Einsatz auf Straßen und gegebenenfalls auf Schienen, im Falle von Multiblock E-POOL Schiene-Straße Transportern und Bussen. Es werden hier ebenfalls zentral Eingangs-Flanschaufsteckeinheiten 1-26 mit Innenraumschwenk-Flanschaufsteckeinheiten 9'-28 vorgesehen. Außerdem werden je nach Ausführung, Transporter oder Busse, Fahrzeugsitze oder Beladeeinheiten und auch mit Kühlbox-Flanschaufsteckeinheiten 1-12, gemäß der Fig. 8, kombiniert, die vertikal abziehbar und absenkbar sind und im Innenraum der Multiblock Robot System-Standardzelle 1-28 dicht hintereinander und nebeneinander angeordnet werden. Multiblock Robot E-POOL Individual-PKW's und der E-POOL Transporter gemäß der Patentanmeldung U.S. 09/298,204 werden ebenfalls mit einer Multiblock Robot-System-Standardzelle 1-28 ausgerüstet. Konzeptionell sind die Multiblock Robot-System-Standardzellen 1-28 für Individual PKW's, in der Ausführung gleich den Multiblock Robot-System-Standardzellen 1-28 gemäß der Fig. 9a. Sie werden auf eine Drehflansch-Steckverbindung 2-2 einer Multiblock Robot Fahrzeugchassis-Flanschaufsteckeinheit 9'-8 mit den Multiblock-Robot Fahrantrieben 9'-9, aufgesteckt. Die Inneneinrichtung ist entsprechend den Aufgaben von Straßenfahrzeugen angepaßt. Die Multiblock Robot-System-Standardzelle 1-28 besteht aus Rück-und Vorderteil die wie eine Karrosserie geformt sind und beide miteinander verbunden und auf der zentralen Drehflansch-Steckverbindung 2-2 aufgesteckt sind. Im Bodenbereich der Verbindung zwischen Rück- und Vorderteil der Multiblock Robot-System-Standardzelle 1-28, ist direkt über deren zentraler, äußerer Drehflansch-Steckverbindung 2-2, die die Steckverbindung zur Drehflansch-Steckverbindung 2-2 der Fahrzeugchassis-Flanschaufsteckeinheit 9'-8 herstellt, eine zweite zentrale, innere Drehflansch-Steckverbindung 2-2 aufgesteckt. Auf diese ist die Eingang-Flanschaufsteckeinheit 1-26 aufgesteckt, die hier aus der Innenraumschwenk-Flanschaufsteckeinheit 9'-28 und den beiden, nach oben, aus der Innenraumschwenk-Flanschaufsteckeinheiten 9'-28 abziehbaren, bzw. nach unten absenkbaren Innenraum-Teilsegment-Flanschaufsteckeinheiten 1-12' besteht. Beide Innenraum-Teilsegment-Flanschaufsteckeinheiten 1-12' besitzen in Dach- und Bodenposition nicht drehbare Flanschsteckverbindungen 2-2'. Die rückwärtige Innenraum-Teilsegment-Flanschaufsteckeinheit 1-12' dient als Beladeeinheit. Die vordere Innenraum-Teilsegment-Flanschaufsteckeinheit 1-12' ist mit Fahrzeugsitzen und Bedienungselementen, für alle Funktionen des Multiblock Robot E-POOL Individual-PKW's ausgestattet. Die Innenraumschwenk-Flanschaufsteckeinheit 9'-28, mit den beiden Teilsegment-Flanschaufsteckeinheiten 1-12', ist über die zentrale Drehflansch-Steckverbindung 2-2 um 360° frei schwenkbar und gibt über die Seitenöffnungen 9'-37' den Zugang und Zugriff zu den Fahrzeugsitzen und der Beladeeinheit frei. Es werden für vollkommen selbstoperierende Multiblock Robot E-POOL Individual-PKW's auch jeweils spiegelgleiche, nur Beladeeinheiten ohne Fahrzeugsitze eingesetzt, oder umgekehrt für den überwiegenden Personentransport, auch für die rückwärtige Innenraum-Teilsegment-Flanschaufsteckeinheit 1-12' Fahrzeugsitze, kombiniert mit Beladeeinheiten vorgesehen. Dabei werden die hinteren Fahrzeugsitze nicht spiegelgleich, sondern ebenso wie die Vordersitze, in Fahrtrichtung angeordnet. Das Multiblock Robot Planeten-Bodenahrzeug besitzt ein konzeptionell identisches Chassis wie ein Multiblock Robot E-POOL Individual PKW, es ist jedoch mittig zur Längsachse zusammenklappbar, so daß es beim Raumtransport wenig Platz beansprucht und wird optional mit Gurt- oder Radantrieb-Flanschaufsteckeinheiten 9'-8 ausgeführt. Auf die zentrale Drehflansch-Steckverbindung 2-2 des Fahrzeugchassis 9'-8 ist für Piloten eine Sauerstoffbox Flanschaufsteckeinheit 1-12 aufgesteckt, die in der mechanischen Funktion identisch zu den Innenraum-Flanschaufsteckeinheiten 1-12,1-12' der E-POOL Individual PKW's ist. Hier wird jedoch zusätzlich zu dem Multiblock Robot Standarteil 2-1, das zentral auf die Fahrzeugchassis-Flanschaufsteckeinheit aufgesteckt ist und die Schwenkung um 360° durchführt, eine Multiblock Robot Sauerstoff-Pumpen Flanschaufsteckeinheit 9'-33 vorgesehen mit zusätzlichem Sauerstofftank-Flanschaufsteckgehäuse 9'-47, identisch zu den Kraftstoff-Flanschaufsteckgehäusen 9'-47, die für Multiblock Roboter gemäß der Fig. 5 vorgesehen sind, so daß Sauerstoff in die Multiblock Robot Sauerstoffbox Flanschaufsteckeinheit 1-12, über Multiblock Robot Pumpen-Flanschaufsteckeinheiten 9'-33 einpumpt wird, sobald die Sauerstoffbox Flanschaufsteckeinheit 1-12 eingeschwenkt ist und die Außenöffnungen von der Innenraumschwenkeinheit 9'-37 geschlossen sind. So hat die gesamte Sauerstoffbox Flanschaufsteckeinheit 1-12 die Wirkung eines Sauerstoffgeräts ohne notwendige Zusatzgeräte, innerhalb dessen die Piloten frei atmen können. Die Sauerstoffbox Flanschaufsteckeinheit 1-12 wird in identischer Ausführung auch für unter Wasser Arbeiten eingesetzt, und dient dort als Luftschleuse. In diesem Fall wird nach Eintritt in die Sauerstoffbox Flanschaufsteckeinheit 1-12 durch Taucher, das ebenfalls eingedrungene Wasser ausgepumpt und gleichzeitig Sauerstoff eingepumpt. Für das Multiblock Robot Planeten-Bodenfahrzeug für Multiblock Weltraum Roboter wird im Gegensatz zum Pilotenfahrzeugs keine Sauerstoffbox-Flanschaufsteckeinheit 1-12 vorgesehen, sondern eine zusammenklappbare Aufstiegs-Flanschaufstiegseinheit 1-12'' für die Multiblock Roboter, im hinteren Teil eine Solar Flanschaufsteckeinheit 9'-25, im vorderen Teil einer Multiblock Robot Antennen Flanschaufsteckeinheit 9'-3 und im Mittelteil, die eigentliche Aufstiegsplattform für die Multiblock Weltraum Roboter, mit beidseitigen Stufen.

### Fig. 10,11,

Der dargestellte Multiblock Robot See-Gesamtkomplex ist stationär auf See angeordnet. Die Multiblock Robot-System-Standardzellen 1-28 werden hier auf Fundament-Flanschaufsteckeinheiten 9'-19 und separate, vertikale Zugangskanäle 1-25' aufgesteckt. Diese haben gleichzeitig Vertikalstützencharakter. Die separaten, vertikalen Zugangskanäle 1-25', für die Aufnahme von Seilzug- und Hydraulik-Flanschaufsteckeinheiten 3-25, werden von zusätzlichen Treppenhaus-Einrichtungen 1-25'', Versorgungskanälen 10-1' und von Flüssigkeitskanälen 9'-40', gemäß den vorangegangen Fig., ummantelt. Die separaten, vertikalen Zugangskanäle 1-25' werden je nach statischen Gesichtspunkten bis zur Kopfposition und darüberhinaus, wie in Fig. 17, zentral durch die einzelnen Multiblock Robot-System-Standardzellen 1-28 geführt und übernehmen eine zusätzliche Gesamtstützenfunktion des Multiblock Robot Gesamtkomplexes. Zwischen jeder der übereinander aufgesteckten Multiblock Robot System-Standardzellen 1-28 ist eine Multiblock-Vertikal-Windrotor Flanschaufsteckeinheit 9'-49 aufgesteckt. Weiterhin ist eine Multiblock Windrad Flanschaufsteckeinheit 9'-52 für die energieautonome Stromversorgung des Multiblock Robot Gesamtkomplexes in Kopfposition aufgesteckt und ein Multiblock Robot Hubschrauber, gemäß der Fig. 15, ist auf der Multiblock Fluglandeplattform-Flanschaufsteckeinheit 1-34 gelandet. Die einzelnen separaten, vertikalen Zugangskanäle 1-25' werden in rechtwinkliger Position zueinander aufgestellt und durch separate, äußere, horizontale Zugangskanäle 12-1 über Drehflansch-Steckverbindungen 2-2 verbunden und sind ausführungsidentisch mit den Zugangskanälen 12-1, innerhalb der Multiblock Robot System-Standardzellen 1-28. Sie sind wie diese, je nach Anwendungsanspruch, von Versorgungskanälen 10-1' und von Flüssigkeitskanälen 9'-40' ummantelt. Die äußeren Zugangskanäle 12-1, weisen auch seitlich, oberhalb und unterhalb des Gesamtverlaufs, Drehflansch-Steckverbindungen 2-2 auf Die äußeren, horizontalen Zugangskanäle 12-1 verbinden die einzelnen, in gleicher Höhe zueinander aufgesteckten Multiblock Robot-System-Standardzellen 1-28, mit den internen horizontalen Zugangskanäle 12-1, so daß ein Übergang durch Personen und Multiblock Roboter, als auch ein Austausch von Versorgungsmaterial und Versorgungsflüssigkeiten, von Strom und Kommunikation, von einer Sektion des Multiblock Robot Gesamtkomplexes zur anderen, auf kürzesten Wegen erfolgen kann. Die äußeren, horizontalen Zugangskanäle 12-1 bilden in einer Höhe mit den Zugängen zu den vertikalen Zugangskanälen 1-25', zueinander und auch unterhalb und oberhalb dazu, rechtwinklige Rahmen die als unterschiedliche Anwendungsfelder genutzt werden. So spannt sich über das Anwendungsfeld für Fischfang, ein Fischereinetz 1-36, daß zwischen den benachbarten, separaten, vertikalen Zugangskanälen 1-25' gespannt wird und über die seitlich angeordneten Drehflansch-Steckverbindungen 2-2 auf die Hubwinden-Flanschaufsteckeinheiten 3-25 aufgesteckt sind, von diesen eingezogen, bzw. abgesenkt wird. Es werden dementsprechend unterschiedlichste Anwendungsfelder angelegt, für Meerwasserentsalzung, aber auch für Landwirtschaft, die Förderung von Bodenschätzen und Bergung von Havaristen, mittels der Multiblock Flug- und unter Wasser Roboter, gemäß der Fig. 5, und der Einrichtungen, gemäß der Fig. 12 sowie für die Aufbereitung und für andere Bereiche, die für die Selbstversorgung des Multiblock Robot See-Gesamtkomplexes erforderlich sind, aber auch für die Versorgung externer Bereiche. Für die Meerwasserentsalzungs-Anwendungsfelder wird das Meerwasser über Flüssigkeitskanäle 9'-40' und Multibllock-Flüssigkeitspumpen 9'-33 gemäß der Fig. 1, den entsprechenden Anwendungsfeldern zugeleitet und das rückgwonnene Trinkwasser speziellen, hierfür vorgesehenen Flüssigkeitskanälen 9'-40' zugeleitet und außer dem eigenen Multiblock Robot See-Gesamtkomplex, auch über separate, über dem Seeboden verlegte horizontale Flüssigkeitskanälen 9'-40', dem Festland oder anderen Multiblock Robot See-Gesamtkomplexen zugeführt, die in weiterer Entfernung aufgestellt sind. Desgleichen für überschüssigen Strom, der vom Multiblock Robot See-Gesamtkomplex über den notwendigen Eigenverbrauch hinaus durch die Multiblock- Sonnen und Wind-Flanschaufsteckeinheiten erzeugt wird und der über äußere, horizontale Strom- und Versorgungskanäle 10-1', über dem Seeboden bis zum Festland, oder anderen Verbrauchern geführt wird. Zusätzlich werden die eigenen Produktionen des Multiblock Robot See-Gesamtkomplexes per Multiblock Robot Schiffseinheiten 1-34 transferiert, die ebenfalls über die horizontalen, äußeren Zugangskanäle 12-1, Flüssigkeitskanäle 9'-40' und Versorgungsleitungen 10-1', beladen werden. Ein Güteraustausch erfolgt auch durch die Multiblock-Hubschraubereinheiten, die ebenso wie die Multiblock Flug-Roboter auf den Landeplattformen 1-34 landen und starten.

### Fig. 12,

Der Multiblock Robot See-Gesamtkomplex ist ähnlich aufgebaut wie der Multiblock Robot See-Gesamtkomplex der Fig. 10,11,. Hier werden jedoch zusätzlich unter Wasser Multiblock Robot-System-Standardzellen 1-28 an den separaten, vertikalen Zugangskanälen 1-25' geführt und in vertikaler Richtung über die Multiblock-Robot Hub-Flanschaufsteckeinheiten 1-31, die seitlich neben den separaten, vertikalen Zugangskanälen 1-25' angeordnet sind, angehoben und abgesenkt. Die Multiblock-Robot Hub-Flanschaufsteckeinheiten 1-31, die jeweils in der Kopfposition der zu oberst positionierten Multiblock Robot-System-Standardzellen 1-28 aufgesteckt sind werden auch hier nach dem Zusammenstecken des Multiblock-Robot Gesamtkomplexes, über Hubseile mit den einzelnen Multiblock-Robot Hub-Flanschaufsteckeinheiten 1-31 verbunden und über die gesamte Aufzugskanalhöhe, von der Kopfposition bis zur See-Bodenposition innerhalb der separaten, vertikalen Zugangskanälen 1-25' angehoben, bzw. abgesenkt. Der Zugang von den separaten, vertikalen Zugangskanälen 1-25' zu den unter Wasser befindlichen Multiblock Robot-System-Standardzellen 1-28 erfolgt über die nicht drehbaren Flanschsteckverbindungen 2-2', die in mehreren Höhenpositionen seitlich an den separaten, vertikalen Zugangskanälen 1-25 angeordnet sind und durch Schiebetüren verschlossen sind, bzw. geöffnet werden, wenn die entsprechenden gegenüberliegenden Zugangsöffnungen im Inneren der jeweiligen, eingetauchten Multiblock Robot-System-Standardzellen 1-28 auf gleicher Höhe liegen. Auf dem Seeboden ist eine Multiblock Robot-System-Standardzelle 1-28 gelandet, die neben der selbstoperierenden Tauch- und Vortriebsfähigkeit, auch bodenverfahrbar ist. Für die Tauchoperationen werden interne Flüssigkeitskanäle 9'-40' als Flut-Tanks genutzt und je nach Tauchoperation geflutet oder leer gepumpt. Für den Vortrieb ist eine Multiblock Robot Vortriebsschrauben-Flanschaufsteckeinheit 9'-54 und für die horizontale Richtungs-Steuerung eine Ruder-Flanschaufsteckeinheit 9'-53 am Heck der eingetauchten Multiblock Robot-System-Standardzelle 1-28 aufgesteckt. Diese Einrichtungen werden auch am Heck der über Wasser verfahrbaren Multiblock Robot-System-Standardzellen 1-28, auf die dort befindlichen Drehflansch-Steckverbindungen 2-2 aufgesteckt. Die Seebodenverfahrbarkeit wird durch Multiblock Robot Gurt-Flanschaufsteckeinheiten gewährleistet und das Ausgleichen von Zerklüftungen und Bodenunebenheiten und Halten in immer ausgewogener, horizontaler Position der Multiblock Robot-System-Standardzellen 1-28 während der See-Bodenfahrt, wird durch Multiblock Robot Gelenkarme 9'-14 erreicht. Die dargestellte bodenverfahrbare tauchfähige Multiblock Robot-System-Standardzelle 1-28 dockt seitlich an eine Drehflansch-Steckverbindung 2-2 an, zwecks Durchgangsverbindung zum separaten, vertikalen Zugangskanal 1-25'. Die Außenkontour der eingetauchten Multiblock Robot-System-Standardzellen 1-28, die an den separaten, vertikalen Zugangskanälen 1-25' geführt werden, wie auch die der Multiblock Robot-System-Standardzellen 1-28 die eingetaucht, selbstoperierend mit eigenem Antrieb verfahren, sind ebenso wie alle über Wasser verfahrbaren Multiblock Robot-System-Standardzellen 1-28, in der Außenkontour ähnlich, gemäß der Fig. 12c, ausgeführt. Die unter Wasser eingetauchten, vertikal geführten und selbstoperierenden Multiblock Robot System-Standardzellen 1-28 werden für geologische Untersuchungen, Unterwasserlabors und die Förderung von festen und flüssigen Bodenschätzen, Bergungsaufgaben, den Fischfang und weitere Unterwasser-Anwendugen eingesetzt. Ein Multiblock Robot See-Gesamtkomplex ist konzeptionell auch auf dem Festland, im Weltraum und auf anderen Planeten einsetzbar.

### Fig. 13

Multiblock Robot schwimm- und tauchfähige Individual- und Gesamtkomplexe bestehen aus Multiblock Robot-System-Standardzellen 1-28 gemäß der Fig. 12c, die mit Vortriebsschrauben-Flanschaufsteckeinheiten 9'-54 und Ruder-Flanschaufsteckeinheiten 9'-53 ausgerüstet sind. Die über Wasser fahrenden Multiblock Robot System-Standardzellen 1-28 werden jeweils einzeln verfahren oder zu mehreren hintereinander, wobei diese durch drehflexible Drehflansch-Steckverbindungen 1-28, gemäß der Fig. 2 miteinander verbunden sind und hierbei nur die letzte der Multiblock Robot-System-Standardzellen 1-28 des hintereinander angeordneten See-Verbandes Schrauben-Flanschaufsteckeinheiten 9'-54 und Ruder-Flanschaufsteckeinheiten 9'-53 erhält. Außderdem werden die Multiblock Robot-System-Standardzellen 1-28 auch auf eine Schiffs-Flanschaufsteckeinheit 1-34 einzeln, oder zu mehreren hintereinander auf, im entsprechenden Abstand zueinander entfernten, Drehflansch-Steckverbindungen 2-2 aufgesteckt. In diesem Fall erhält nur die Schiffs-Flanschaufsteckeinheit 1-34 Vortriebsschrauben-Flanschaufsteckeinheiten 9'-54 und Ruder-Flanschaufsteckeinheiten 9'-53. Bei mehreren hintereinander, auf die Schiffs-Flanschaufsteckeinheit aufgesteckten Multiblock Robot-System-Standardzellen 1-28, entfallen die drehflexiblen Drehflansch-Steckverbindungen 18-2 zwischen den einzelnen Multiblock Robot-System-Standardzellen 1-28, und es werden nur nicht drehbare Flanschsteckverbindungen 2-2' für den Durchgang von einer Multiblock Robot-System-Standardzellen 1-28 zur anderen vorgesehen. Der Durchgang erfolgt auch über separat verlegte, äußere, horizontale Zugangskanäle 12-1 die über, oder unter den Multiblock Robot-System-Standardzellen 1-28 angeordnet werden.

### Fig. 14,

Die über Wasser und unter Wasser fahrenden Multiblock Robot Individualeinheiten und Gesamtkomplexe sind mit Teleskop-Zugangskanälen 1-37 ausgerüstet, die auf die Drehflansch-Steckverbindungen 2-2 in Bodenposition aufgesteckt sind. Das zugehörige Multiblock Robot Standardteil 2-1 ermöglicht die Schwenkung um 360°, sowie die Schwenkung in vertikaler Richtung um 180° bis unter die Multiblock Robot-System-Standardzelle 1-28. Für die Fahrt zum Zielpunkt wird der Teleskop-Zugangskanal 1-37 in eingezogenem und eingeschwenktem Zustand, horizontal unter der Multiblock Robot-System-Standardzelle 1-28 gehalten. In Bodenposition ist der Teleskop-Zugangskanal 1-37 mit Multiblock Robot Gelenkarmen 9'-14 und Greifeinrichtungen 9'-56 und anderen Multiblock Robot Flanschaufsteckeinheiten für Unterwasser- und Bodenarbeiten und auch mit Multiblock unter Wasser Kameras 9'-33 ausgerüstet, die auf die Drehflansch-Steckverbindungen 2-2 aufgesteckt werden. Die Teleskop-Zugangskanäle 1-37 erhalten in Bodenposition auch Bohrkopf-Flanschaufsteckeinheiten 9'-57 für Bodenbohrungen, Bagger-Flanschaufsteckeinheiten und die Förderung von Flüssigkeiten und festen Materialien. In Bodenposition ist außerdem eine Zugansöffnung 1-24 mit Schiebetür 1-24' für den Zugang von Tauchern und Multiblock unter Wasser Robotern vorgesehen. Die Teleskop-Zugangskanäle 1-37 werden zusätzlich von unter Wasser operierenden Multiblock Robot-System-Standardzellen 1-28 angesteuert und über die Näherungssensoren 9'-21 der zentralen Drehflansch-Steckverbindungen 2-2 in Kopfposition in deckungsgleiche Position mit der Drehflansch-Steckverbindung 2-2 in Bodenposition der Teleskop-Zugangskanäle 1-37 gebracht und können dann mit der eigenen Tauchfähigkeit vertikal auf und abbewegt werden, unter vertikaler Führung und mit Zugang zu den Teleskop-Zugangskanälen 1-37. Die Teleskop-Zugangskanäle 1-37 sind konzeptionell wie die separaten, vertikalen Zugangskanäle 1-25' ausgelegt. Sie nehmen jedoch intern, je nach Anforderung zusätzliche Fördertechnik-Einrichtungen für die kontinuierliche Förderung von flüssigen und festen Bodenschätze vom Seegrund zur Seeoberfläche und den Multiblock Robot Individual- und See-Gesamtkomplexen auf. Die Gesamteinrichtung der über Wasser fahrenden Multiblock Robot System-Standardzellen 1-28 mit Teleskop-Zugangskanälen 1-37 und den entsprechenden Zusatzeinrichtungen, kann auch direkt unter Wasser von tauchfähigen Multiblock Robot System-Standardzellen 1-28 getragen und geführt werden. Für den Einsatz eines Tauchers wird die Sauerstoffbox-Flanschaufsteckeinheit 1-12, aus einem der vertikalen, seitlich angeordneten Zugangskanäle 1-25, der Multiblock Robot-System-Standardzelle 1-28 abgesenkt.

### Fig. 15,16,

Die flugfähigen Multiblock Robot System-Standardzellen 1-28 werden optional mit Triebwerks-Flanschaufsteckeinheiten 9'-58 und Vertikalrotor Flanschaufsteckeinheiten 9'-59 ausgerüstet, die auf seitlich angeordnete Drehflansch-Steckverbindungen 2-2 und die zentrale Drehflansch-Steckverbindung 2-2 in Kopfposition der Multiblock Robot System-Standardzellen 1-28 aufgesteckt werden. Zusätzlich werden optional Heck-Flanschaufsteckeinheiten 9'-62 und Cockpit-Flanschaufsteckeinheiten 9'-61 auf die rückwärtige und die vordere Drehflanschsteckverbindung 2-2 aufgesteckt. Die Heck- und Cockpit-Flanschaufsteckeinheiten 9'-62,9'-61 sind durch Multiblock Robot Gelenkarme 9'-14 und Multiblock Robot Standardteile 2-1 aufklappbar und schließbar. Sie sind in Bodenposition mit zwei Multiblock Robot Bodenfahrwerken 9'-9 ausgerüstet. Einem klein dimensionierten Zustell-Bodenfahrwerk 9'-9 am Endpunkt der unteren, aufklappbaren Flanschaufsteckeinheit 9'-60' und einem landeoperativen Bodenfahrwerk 9'-9. Die Heck- und Cockpit Flanschaufsteckeinheiten 9'-62,9'-61 werden für die Flugausrüstung der Multiblock Robot System-Standardzellen 1-28 in Richtung der zentralen Drehflansch-Steckverbindung 2-2 verfahren und über die Näherungssensoren 9'-21 der Drehflansch-Steckverbindungen 2-2 die jeweils für das Zusammenstecken der Heck- und Cockpit Flanschaufsteckeinheiten 9'-62,9'-61 an diesen und den horizontal gegenüberliegenden Drehflansch-Steckverbindungen 2-2 an den Multiblock Robot System-Standardzellen 1-28, in Deckung gebracht und soweit zugefahren, bis die zugehörigen Steckereinheiten 2-3 und Steckerbuchseneinheiten 2-3' eingerastet sind und somit alle Durchgangs- und Versorgungskanäle 12-1,10-1',9-40 mit ihren Strom- und Kommunikationleitungen und Flüssigkeitsleitungen 10-1, gemäß der Fig. 1,2, geschlossen und miteinander verbunden sind. Durch die Multiblock Robot Gelenkarme 9'-14 werden nun die aufgeklappten Flanschaufsteckeinheiten 9'-60', oben und unten zusammengeklappt und und rasten über Einraststecker- und Steckerbuchseneinheiten 2-3,2-3' an der zentralen Drehflansch-Steckverbindung 2-2 der Multiblock Robot System-Standardzellen 1-28 ein. Das Zustell-Bodenfahrwerk 9'-9 wird nur für die Operation des Zusammenfahrens und Zusammensteckens der Heck- und Cockpit-Flanschaufsteckeinheiten 9'-62,9'-61 mit den Multiblock Robot System-Standardzellen 1-28 genutzt und mit den unteren, aufklappbaren Flanschaufsteckeinheiten 9'-60' beim Zusammenklappen und Schließen, mit nach oben gezogen, so daß danach nur das vordere und das hintere landeoperative Bodenfahrwerk 9'-9 für die Bodenverfahrbarkeit der gesamten Multiblock Robot Flugeinheit wirksam wird. Die Heck-Flanschaufsteckeinheiten 9'-62 sind für die Flugoperationen mit einer Seitenruder Flanschaufsteckeinheit 9'-62 für die horizontale Steuerung und einer zusätzlichen Triebwerks- Flanschaufsteckeinheit 9'-58 ausgerüstet, die in der rückwärtigen Position der Heck-Flanschaufsteckeinheiten 9'-62 aufgesteckt sind. Die Cockpit-Flanschaufsteckeinheiten 9'-61 sind mit Multiblock Robot Kontroll- und Bordcomputer Flanschaufsteckeinheiten ausgerüstet mit Cockpit Sitzeinheiten und weiteren Einheiten für die Durchführung von Flugoperationen. Der zentrale, abschließbare Zugangskanal 1-25 mit den diesen umgebenden Versorgungskanälen 10-1', bleibt auch bei dem Aufstecken der Vertikalrotor Flanschaufsteckeinheiten 9'-59 erhalten. Die Vertikalrotoren 9'-59 sind selbst wieder Flanschaufsteckeinheiten, die optional mit drei- oder vier Flügeln an der zentralen Drehflansch-Steckverbindung 2-2 aufgesteckt werden. Die Multiblock Robot Flugeinheiten sind nicht nur durch die Vertikalrotor-Flanschaufsteckeinheiten 9'-59 fähig für den Vertikalstart, sondern auch durch die Triebwerks-Flanschaufsteckeinheiten 9'-58 an den Außenseiten der Multiblock Robot System-Standardzellen 1-28, die über die Drehflansch-Steckverbindungen 2-2, frei um 360° schwenkbar sind und somit auch Vertikal-Auftriebsfunktionen übernehmen. Die Multiblock Robot Flugeinheiten werden je nach Flug-Effektivitätserfordernissen ohne die Heck- und Cockpit-Flanschaufsteckeinheiten 9'-62,9'-61 ausgeführt, nur mit einer Cockpit-Flanschaufsteckeinheiten 9'-61, nur mit einer Heck-Flanschaufsteckeinheit 9'-62, nur mit seitlichen Triebwerks-Flanschaufsteckeinheiten 9'-58, nur mit der Vertikalrotor Flanschaufsteckeinheit 9'-59 und der rückwärtigen Triebwerks-Flanschaufsteckeinheit 9'-58 und weiteren optionalen Kombinationen der Multiblock Robot Standardteile, Flanschaufsteckeinheiten und System-Standardzellen zueinander.

### Fig. 17

Der Multiblock Robot Fluglande-Gesamtkomplex besteht aus einer Multiblock Robot System-Standardzelle 1-28 mit Radar-Flanschaufsteckeinheit 9'-3 in Bodenposition. Darüber ist eine ausschiebbare Plattform-Flanschaufsteckeinheit 1-26' aufgesteckt und eine Multiblock Standard Dach-Flanschaufsteckeinheit 1-26 um 180° gedreht aufgesteckt, die mit Inneneinrichtungen für die Aufgaben als Kontrollturm mit Flugleitkontroll-Flanschaufsteckeinheiten für Vertikal-Flugstart und Landeoperationen von Multiblock Robot Flugeinheiten ausgerüstet ist. Durch die einzelnen, zentralen Drehflansch-Steckverbindungen 2-2 wird der zentrale separate, vertikale Zugangskanal 1-25' geführt, der auf eine Fundament-Flanschaufsteckeinheit 9'-19, gemäß den vorhergehenden Fig., aufgesteckt ist. In Kopfposition erhält der separate, vertikale Zugangskanal 1-25 eine Drehflansch-Steckverbindung, die mit Näherungssensoren 9'-21 und einer Aufzugs-Flanschaufsteckeinheit 1-31 ausgeführt wird. Der separate, vertikale Zugangskanal 1-25 ist desweiteren im Inneren mit Seilzug- und Hydraulik-Flanschaufsteckeinheiten 3-25 ausgeführt und erhält seitlich schließbare Drehflansch-Steckverbindungen 2-2 und Zugangsöffnungen 1-24. Die vertikalstartfähigen Multiblock Robot Hubschrauber und Flugeinheiten werden mittels der Näherungssensoren 9'-21 an den Drehflansch-Steckverbindungen 2-2 der eigenen Multiblock Robot System-Standardzellen 1-28, selbstoperierend der Kopfposition des separaten, vertikalen Zugangskanals 1-25' zugeführt, dort horizontal und vertikal präzise positioniert und über die eigenen Triebwerke die für die vertikale Landung um 90° eingeschwenkt wurden, abgesenkt und auf das darunterliegende, bereits gelandete Multiblock Robot Flugzeug, den bereits vertikal gelandeten Multiblock Robot Hubschrauber, oder aber bei noch keinem gelandeten Multiblock Robot Flugzeug und Hubschrauber, direkt auf die Drehflansch-Steckverbindung 2-2 der Dach-Flanschaufsteckeinheit 1-26 aufgesetzt. Für die Start- und Landeoperationen werden die einzelnen übereinander gelandeten Multiblock-Robot Flugeinheiten mit Ihren Flügel-Flanschaufsteckeinheiten 9'-63 so eingeschwenkt, daß die Multiblock-Robot Flugeinheiten und Hubschrauber in oberster Position beim Starten und Landen nicht mit den Triebwerks-Rückstrahlungen auf die Flügel der darunter befindlichen Multiblock-Robot Flugeinheiten auftreffen. Die Flügel-Flanschaufsteckeinheiten 9'-63 der Multiblock Robot Flugzeuge und Hubschrauber werden ebenfalls je nach erforderlicher Flugeigenschaft optional seitlich auf die Drehflansch-Steckverbindungen 2-2 der Multiblock Robot System-Standardzellen 1-28 aufgesteckt und sind ebenso wie die, dann auf die Drehflansch-Steckverbindungen 2-2 in seitlicher Endposition der Flügel-Flanschaufsteckeinheiten 9'-63 aufgesteckten Triebwerks-Flanschaufsteckeinheiten 9'-63, um 360° frei schwenkbar und übernehmen somit Höhen-Steuerungsaufgaben. Insofern ist es auch möglich für Vertikalstarts nicht nur die seitlich aufgesteckten Triebwerks-Flanschaufsteckeinheiten 9'-58 um 90° einzuschwenken, sondern zusätzlich die Flügel-Flanschaufsteckeinheiten 9'-63, bzw. nur die Flügel-Flanschaufsteckeinheiten 9'-63, da dann die in der seitlichen Endposition aufgesteckten Triebwerks-Flanschaufsteckeinheiten 9'-58 mit eingeschwenkt werden, um somit den Luftwiderstand beim Vertikalstart zu reduzieren. In der Luft, während des Fluges, werden die Multiblock-Robot Flugeinheiten, für Auftankoperationen, Material, Personen und Multiblock Roboter Austausch, mittels der Näherungssensoren 9'-21, selbstoperierend übereinander positioniert und über die zentralen, vertikalen Zugangskanäle 1-25 mit den ummantelnden Versorgungsleitungen 10-1 wird eine temporäre Drehflansch-Steckverbindung 2-2 von Multiblock-Robot Flugeinzeug oder Hubschrauber, zum darüber angekoppelten Multiblock-Robot Flugzeug oder zum Hubschrauber geschlossen.

### Fig. 18,19,20,21

Ein Multiblock Robot Raumfahrt Gesamtkomplex besteht aus den Multiblock Robot System-Standardzellen 1-28 mit den seitlich auf Drehflansch-Steckverbindungen 2-2 aufgesteckten Startraketen-Flanschaufsteckeinheiten 9'-64 und optional oberhalb und unterhalb aufgesteckten Start- und Raumraketen-Aufsteckeinheiten 9'-64. Außerdem sind die Multiblock Robot System-Standardzellen 1-28 mit aufsteckbaren Heck- und Bugschutzschild-Flanschaufsteckeinheiten 9'-60',9'-61' ausgerüstet, die in der Funktions- und Ausführungsweise gemäß der aufklappbaren Heck- und Cockpit-Flanschaufsteckeinheiten 9'-62,9'-61 wirksam sind, jedoch für den Multiblock Robot Raumfahrt Gesamtkomplex die Aufgabe des Hitzeschutzes bei durchdringen der Stratosphäre und auch gegen Treffer von Raumpartikeln und Strahlungen übernehmen. Der Multiblock Robot Raumfahrt Gesamtkomplex benötigt keine Abschußrampe. Es werden die längeren und größer dimensionierten Startraketen Flanschaufsteckeinheiten 9'-64 mit kürzeren und kleiner dimensionierten Start- und Raumraketen-Flanschaufsteckeinheiten 9'-64 kombiniert aufgesteckt. Oder aber die Multiblock Robot System-Standardzellen 1-28 werden mit internen in der rückwärtigen Position aufgesteckten Start- und Raumraketen-Flanschaufsteckeinheiten 9'-64' ausgerüstet und diese mit den seitlich aufgesteckten und auch oberhalb und unterhalb aufgesteckten Startraketen-Flanschaufsteckeinheiten 9'-64, und Start- und Raumraketen Flanschaufsteckeinheiten 9'-64' kombiniert. Für den Start und die Abhebung vom Boden werden zuerst die kleineren Start- und Raumraketen-Flanschaufsteckeinheiten 9'-64' kurzzeitig gezündet, bis die größeren Start-Flanschaufsteckeinheiten 9'-64 vom Boden freikommen. Dann werden diese gezündet und die Start- und Raumraketen-Flanschaufsteckein-heiten 9'-64' abgeschaltet. Nach Durchdringen der Stratosphäre und Erreichen des Orbit werden die Startraketen-Flanschaufsteckeinheiten 9'-64 von ihren Drehflansch-Steckverbindungen 2-2 ausgeklinkt und abgestoßen, während gleichzeitig die Start- und Raumraketen-Flanschaufsteckein-heiten 9'-64' wieder gezündet werden und den Weiterflug übernehmen. Die Bug- und Heck-Hitze-, Partikel- und Strahlenschutz-Flanschaufsteckeinheiten 9'-60' und 9'-61' werden je nach Raumgefahren-Situation von den Drehflansch-Steckverbindungen 2-2 an den Multiblock Robot System-Standardzellen 1-28 ausgeklinkt und abgestoßen, oder beibehalten. Größere Multiblock Robot Raumfahrt Gesamtkomplexe umfassen gemäß der Fig. 18b zwei übereinander aufgesteckte Multiblock Robot System-Standardzellen 1-28 mit je zwei seitlich aufgesteckten Startraketen-Flanschaufsteckeinheiten 9'-64, zwischen denen je eine Start- und Raumraketen-Flanschaufsteckeinheit 9'-64' angeordnet ist. Über die seitlichen Zugangskanäle 12-1 und die horizontalen Zugangskanäle 1-25 der Multiblock Robot System-Standardzellen 1-28 werden Multiblock Weltraum Roboter, Satelliten und Raumpiloten ausgesetzt und aufgenommen. Die Multiblock Weltraum Roboter werden konzeptionell ausgeführt wie die Multiblock Flug Roboter, gemäß der Fig. 5. Sie werden jedoch mit Raketen-Flanschaufsteckeinheiten 9'-64' ausgerüstet. Jeder Multiblock Robot Raumfahrt Gesamtkomplex kann komplett als Weitraumstation eingesetzt werden und auf anderen Planeten. Die Multiblock Robot Raumfahrt Gesamtkomplexe werden je nach Startgewicht jedoch auch von separaten, vertikalen Zugangskanälen 1-25', gemäß der Fig. 10,12 und 17, mit ummantelnden Versorgungskanälen 10-1' gestartet, wobei die Multiblock Robot System-Standardzellen 1-28 vertikal und horizontal, zentral von den separaten, vertikalen Zugangskanälen 1-25' mit ummantelnden Versorgungskanälen 10-1' geführt werden. Diese werden so dimensioniert, daß sie zusätzlich als Start und Landekomplex für Multiblock-Robot Flugzeuge und Hubschrauber genutzt werden können. Außerdem werden die Multiblock Robot Raumfahrt Gesamtkomplexe, ebenfalls abhängig vom Startgewicht, mit eigenen Vertikalrotoren 9'-59 in große Höhen des Luftraums gehoben, die Vertikalrotoren 9'-59 werden dann von ihren zentralen Drehflansch-Steckverbindungen 2-2 ausgeklinkt und über einen Fallschirm 9'-66 der bis zu diesem Zeitpunkt innerhalb des Vertikalen Zugangskanals 1-25 der Vertikalrotoren 9'-59 untergebracht ist, zur Erde sinken und gleichzeitig werden nunmehr die eigentlichen Startraketen gezündet. Über die seitlichen, horizontalen Zugangskanäle 12-1 und die vertikalen Zugangskanäle 1-25 der Multiblock Robot System-Standardzellen 1-28, werden in der Weltraumzielposition Multiblock Weltraum Roboter, Satelliten und Raumpiloten ausgesetzt und aufgenommen. Im Weltraum werden Multiblock Robot Raumfahrt Gesamtkomplexe übereinander, hintereinander und nebeneinander für Auftankoperationen, Material, Personen und Multiblock Roboter Austausch, mittels der Näherungssensoren 9'-21 selbstoperierend positioniert. Wie für alle Multiblock Individual Systeme und Gesamtkomplexe ist auch für Multiblock Robot Raumfahrt Gesamtkomplexe die Kompatibilität mit allen Multiblock Robot Standardteilen und Flanschaufsteckeinheiten, sowie den Multiblock Robot System-Standardzellen 1-28, des Multiblock Robot Gesamtkatalogs gewahrt, die über die jeweiligen Drehflansch-Steckverbindungen 2-2 und hierzu kompatiblen, nicht drehbaren Flanschsteckverbindungen 2-2' beliebig kombinierbar und gegeneinander austauschbar sind.

## Patentansprüche

1. Multiblock Robot System, dadurch gekennzeichnet, daß standardisierte, zueinander kompatible und zusammensteckbare stationäre und mobile, see-, flug- und raumfahrtfähige Multiblock Robot-System-Standardzellen (1-28) und Multiblock Roboter gebildet werden, die mit minimalem Aufwand in Entwicklung und Konstruktion erstellt werden und durch wahlfreie Kombination untereinander und mit dem Gesamtspektrum aller Multiblock Robot Standard Teile, über Näherungs-Sensor (9'-21) bestückte Drehflansch-Steckverbindungen (2-2) und nicht drehbare Flansch-Steckverbindungen (2-2') zu zielgerichteten, stationären und mobilen Multiblock Robot Individualsystemen und Multiblock Robot Festland-, See-, Flug-, und Raumfahrt-Gesamtkomplexen ausgebildet werden, die untereinander austauschbar sind und außerdem jederzeit aufgelöst und zu beliebig anderen Multiblock Robot-Systemlösungen zusammengesteckt werden können.

2. Multiblock Robot System, nach Anspruch 1, dadurch gekennzeichnet, daß die Multiblock Robot-System-Standardzellen (1-28) mit vertikalen und horizontalen Zugangs- und Versorgungskanälen (1-25),(12-1)(10-1') ausgeführt werden, daß die vertikalen Zugangskanäle (1-25) Seilzug- und Hydraulik-Hub-Flanschaufsteckeinheiten (3-25) erhalten, daß die vertikalen und horizontalen Zugangskanäle (1-25),(12-1) von Treppenhaus-Einrichtungen (1-25'') eingeschlossen werden und von Flüssigkeitskanälen (9'-40) umgeben werden, daß die vertikalen und horizontalen Versorgungskanäle (10-1'), Versorgungsleitungen (10-1) für Strom- und Kommunikation und für Flüssigkeiten führen, daß die vertikalen und horizontalen Zugangs- und Versorgungskanäle (1-25),(12-1) die Funktion der Multiblock Robot Drehflansch- und nicht drehbaren Flansch-Steckverbindungen (2-2)(2-2') ausüben und im Falle der Drehflansch-Steckverbindungen (2-2), jeweils in den internen und an der Außenkontour befindlichen Endpositionen Drehverbindungen (4-1) mit Antriebsmotoren 8-1 aufweisen und zentral, horizontal und vertikal mit benachbarten Multiblock Robot Standardteilen, Multiblock Robot Flanschaufsteckeinheiten und Multiblock Robot-System-Standardzellen (1-28) und deren horizontalen und vertikalen Zugangs-, Versorgungs- und Flüssigkeitskanälen (1-25),(12-1),(10-1'),(9'-40) und den Versorgungsleitungen (10-1) über Einraststeckereinheiten (2-3) und Steckerbuchseneinheiten (2-3') verbunden werden und die Multiblock Robot-System-Standardzellen (1-28) dabei um 360° frei schwenkbar bleiben und der Zugriff zu den Versorgungskanälen (1-25),(12-1) und den Versorgungsleitungen (10-1') in jeder eingeschwenkten Position, trotzdem gewahrt bleibt.

3. Multiblock Robot System, nach einem der Ansprüche 1 bis 2, dadurch gekennzeichnet, daß die Multiblock Robot-System-Standardzellen (1-28) intern mit konzentrischen Verschieberingen (1-16) für Material und Vorrichtungen ausgerüstet werden, die die vertikalen und horizontalen Zugangskanäle (1-25),(12-1) Treppenhaus-Einrichtungen (1-25'') und Versorgungskanäle (1-25),(12-1)(10-1') umgeben und Zugriffsgänge und Zugriffsöffnungen (1-24'') bilden, daß die Multiblock Robot-System-Standardzellen (1-28) intern mit Zwischenwänden (1-29) und Schiebetüren (1-24), sowie mit Zwischenböden (1-30), ausgerüstet sind, daß die Multiblock Robot-System-Standardzellen (1-28) intern eine Eingang-Flanschaufsteckeinheit (1-26) mit Schiebetüren (1-24) nach außen und nach innen, mit Zugang zu den horizontalen Zugangskanälen (12-1) erhalten, daß über der Eingangs-Flanschaufsteckeinheit (1-26) eine nach außen ausschiebbare Plattform-Flanschaufsteckeinheit (1-26') angeordnet ist, die nach außen mit einer Brüstung abgedeckt ist, daß die Multiblock Robot-System-Standardzellen (1-28) an der Außenkontour mit schwenkbaren Segmentsolar-Flanschaufsteckeinheiten (9'-27) ausgerüstet sind und Fensteröffnungen (1-24') erhalten und daß für den mobilen Einsatz der Multiblock Robot-System-Standardzellen (1-28), an der Außen-Peripherie Sensorring-Flanschaufsteckeinheiten (9'-15) vorgesehen werden, daß die Multiblock Robot-System-Standardzellen (1-28) aus Standard-Teilsegmenten (1-27) zusammengesteckt werden, die an den Segmentseiten und zur Verbindung mit den zentralen Drehflansch-Steckverbindungen (2-2), Steckereinheiten (2-3), Steckerbuchseneinheiten (2-3') und Dichtungsmaterial (2-3'') aufweisen, sowie oberhalb und unterhalb an der Peripherie Versorgungsleitungen (10-1) führen, mit vertikalen Versorgungsleitungen (10-1) zur Verbindung mit den horizontalen Versorgungsleitungen (10-1), die die horizontalen Zugangskanäle (12-1) umgeben.

4. Multiblock Robot System, nach einem der Ansprüche 1 bis 3, dadurch gekennzeichnet, daß separate Eingangs- und Dach-Flanschaufsteckeinheiten (1-26) vorgesehen werden, die ebenfalls zentrale, horizontale Zugangskanäle (1-25),(12-1), Treppenhaus-Einrichtungen (1-25'') und Versorgungskanäle (1-25),(12-1)(10-1') erhalten und zusätzlich Speichervolumen für Multiblock-Robot Batterie-Flanschaufsteckeinheiten (9'-6) und andere Materialien bieten, daß Zwischen- und Landeplattform-Flanschaufsteckeinheiten (1-33),(1-33'),(1-34) mit und ohne Brüstung vorgesehen werden, daß außer den zentralen, internen Zugangskanälen (1-25), separate, vertikale Zugangskanäle (1-25') mit Seilzug- und Hydraulik-Hub-Flanschaufsteckeinheiten (3-25) für die Vertikal-Förderung von Multiblock Kühlbox- und Sauerstoff-Flanschaufsteckeinheiten (1-12)(1-12') vorgesehen werden, daß auf die vertikalen und horizontalen Zugangskanäle (1-25),(12-1), Treppenhaus-Einrichtungen (1-25'') und Versorgungskanäle (1-25),(12-1)(10-1') in den Endpositionen drehflexible Drehflansch-Steckverbindungen (18-2) zur drehflexiblen Verbindung mit benachbarten Flanschaufsteckeinheiten, Multiblock Robot Standarteilen und Multiblock Robot-System-Standardzellen (1-28) vorgesehen werden und zusätzlich Multiblock Robot Gelenkarme (9'-14) als flexible, multiachsen bewegliche Vertikalstützen vorgesehen werden, die bei unsicheren Bodenverhältnissen, Erdbeben, in sturmgefährdeten Gebieten, bei Hochwasserschäden, Stöße und Verschiebungen auffangen und die stationären und mobilen Multiblock Robot Individualsysteme- und Gesamtkomplexe im Gleichgewicht haften und auch vertikal freiheben.

5. Multiblock Robot System, nach einem der Ansprüche 1 bis 4, dadurch gekennzeichnet, daß für eine weitgehend energieautonome Versorgung der stationären und mobilen Multiblock Robot Individualsysteme- und Gesamtkomplexe separate Solar- und Windrad Flanschaufsteckeinheiten (9'-51),(9'-52) und Vertikal-Windrotor Flanschaufsteckeinheiten (9'-49) aufgesteckt werden und außerdem kombinierte Vertikal-Solar-Windrotor Flanschaufsteckeinheiten (9'-49') mit Solar-Flanschaufsteckeinheiten (9'-48') die auf konisch zulaufende Außensegmente (9'-48) der Vertikal-Solar-Windrotor Drehrotoren aufgesetzt sind und daß die Solar- und Windrad-, die Vertikal-Windrotor- und Vertikal-Solar-Windrotor Flanschaufsteckeinheiten (9'-51),(9'-52),(9'-49),(9'-49'), ebenfalls zentrale vertikale und horizontale Zugangskanäle (1-25),(12-1), Treppenhaus-Einrichtungen (1-25'') und Versorgungskanäle (1-25),(12-1)(10-1') und in den Endpositionen drehflexible Drehflansch-Steckverbindungen (18-2) zur drehflexiblen Verbindung mit benachbarten Flanschaufsteckeinheiten, Multiblock Robot Standarteilen und Multiblock Robot System-Standardzellen (1-28) aufweisen, daß separate, vertikale Zugangskanäle (1-25'), die ausführungsidentisch mit den zentralen vertikalen Zugangskanälen (1-25) der Multiblock Robot-System-Standardzellen (1-28) und zugehörigen Flanschaufsteckeinheiten sind und ebenfalls je nach Ausführung, Seilzug- und Hydraulik-Hub-Flanschaufsteckeinheiten (3-25) erhalten, sowie Zugangskanäle (1-25) die Treppenhaus-Einrichtungen (1-25'') umfassen und von Flüssigkeitskanälen (9'-40), von Versorgungskanälen (10-1') mit Versorgungsleitungen (10-1) für Strom- und Kommunikation und für Flüssigkeiten umgeben werden und eine vertikale Stützenfunktion der übereinander angeordneten Multiblock Robot-System-Standardzellen (1-28) und zugehörigen Flanschaufsteckeinheiten bilden und die auch durch die Multiblock Robot-System-Standardzellen (1-28) und zugehörigen Flanschaufsteckeinheiten hindurch geführt werden, mit seitlich angeordneten Zugangsöffnungen (1-24) und Drehflansch-Steckverbindungen 2-2 und nicht drehbaren Flansch-Steckverbindungen (2-2').

6. Multiblock Robot System, nach einem der Ansprüche 1 bis 5, dadurch gekennzeichnet, daß mobile Multiblock Robot Individualsysteme durch Multiblock Robot-System-Standardzellen (1-28) gebildet werden, die auf Multiblock Robot E-POOL Individual PKW's, Transporter- und Busse-Fahrzeugchassis-Flanschaufsteckeinheiten (9'-8) aufgesteckt werden, daß die Multiblock Robot-System-Standardzellen (1-28) der Multiblock Robot E-POOL Individual PKW's zentral, vertikal eingefügte und auf Drehflansch-Steckverbindungen (2-2) aufgesteckte Innenraumschwenk-Flansch-aufsteckeinheiten (9'-37) erhalten die um 360° frei schwenkbar sind, Seitenöffnungen (9'-37') besitzen und die ihrerseits zwei spiegelgleichen Teilsegment-Flanschaufsteckeinheiten (1-12'), mit zu den Innenraumschwenk-Flanschaufsteckeinheiten (9'-37) kongruente Seitenöffnungen 9'-37' besitzen, die auf nicht drehbare Flansch-Steckverbindungen (2-2') der Innenraumschwenk-Flanschaufsteckeinheiten (9'-37) aufgesteckt sind, ebenfalls jeweils separat, vertikal absenkbar und abziehbar sind und je für Beladematerial und Fahrzeugsitze und Bedienungseinrichtungen ausgerüstet sind und daß durch Einschwenken der lnnenraumschwenk-Flanschaufsteckeinheiten (9'-37) um 90°, die Seitenöffnungen (9'-37') den Zugang und Zugriff zu den Teilsegment-Flanschaufsteckeinheiten (1-12'), den Fahrzeugsitzen und den Beladeeinheiten frei gegeben werden, daß die Multiblock Robot E-POOL Transporter oder Busse, mit einer Vielzahl von Fahrzeugsitzen und Beladeeinheiten kombiniert und vertikal absenk- und hochziehbaren Multiblock Robot Kühlbox-Flanschaufsteckeinheiten (1-12) im Innenraum der Multiblock Robot-System-Standardzellen 1-28 dicht hintereinander und nebeneinander angeordnet werden, daß Multiblock Robot-Planetenfahrzeuge aus mittig zusammenklappbaren Multiblock Robot Fahrzeugchassis-Flanschaufsteckeinheiten (9'-8) mit Multiblock Robot Rad- und Gurt Flanschaufsteckeinheiten (9'-9) bestehen, auf die zentral Innenraumschwenk-Flanschaufsteckeinheiten (9'-8) Sauerstoffbox-Flanschaufsteckeinheiten (1-12) mit Sauerstofftank- und Pumpen Flanschaufsteckeinheiten (9'-47),(9'-33) für den Pilotentransport und auch Aufstiegs-Flanschaufsteckeinheiten (1-28') für Multiblock Weltraum Roboter aufgesteckt werden, daß die Sauerstoffbox-Flanschaufsteckeinheiten (1-12) mit den Flanschaufsteckeinheiten (9'-47),(9'-33) auch unter Wasser als Luftschleuse für Taucher eingesetzt werden;

7. Multiblock Robot System, nach einem der Ansprüche 1 bis 6, dadurch gekennzeichnet, daß Multiblock Robot See-Gesamtkomplexe gebildet werden, die auf zentrale, separate, vertikale Zugangskanäle (1-25') aufgesteckt sind, die ihrerseits auf, im Seeboden eingesetzte Fundament-Flanschaufsteckeinheiten (9'-19), aufgesteckt sind, daß die einzelnen separaten, vertikalen Zugangskanäle (1-25') und auch die einzelnen übereinander angeordneten Multiblock Robot-System-Standardzellen (1-28) und zugehörigen Flanschaufsteckeinheiten durch separate, horizontale Zugangskanäle (12-1) verbunden werden, die ausführungsidentisch mit den Multiblock Robot-System-Standardzellen (1-28) internen horizontalen Zugangskanälen (12-1) sind und auch je nach Ausführungsanforderung von den entsprechenden Versorgungskanälen (10-1'),(9'-40) umgeben werden, daß die Verbindung der separaten, horizontalen Zugangskanäle (12-1) unterschiedlichste Anwendungsfelder, wie für Solar und Windstrom Erzeugung, Fischfang, Meerwasserentsalzung, für Landwirtschaft, die Förderung und Bergung von Havaristen, durch Multiblock Flug- und Unterwasser Roboter und Aufbereitung für andere Bereiche, die für die Selbstversorgung des Multiblock Robot See-Gesamtkomplexes erforderlich sind und angelegt werden, aber auch für die Versorgung externer Bereiche, daß die rückgwonnenen Flüssigkeiten und erzeugter Strom über die Flüssigkeitskanäle und Versorgungskanäle (9'-40),(10-1') außer dem eigenen Multiblock Robot See-Gesamtkomplex, durch separate, über dem Seeboden verlegte horizontale Versorgungs- und Flüssigkeitskanäle (10-1'),(9'-40) dem Festland oder anderen Multiblock Robot See-Gesamtkomplexen zugeführt werden und daß die eigenen Produktionen des Multiblock Robot See-Gesamtkomplexes per Multiblock Robot Schiffseinheiten (1-34) transferiert werden, die ebenfalls über die horizontalen, äußeren Zugangskanäle,(1-25), Flüssigkeitskanäle (9'-40') und Versorgungsleitungen (10-1'), beladen werden, sowie durch Güteraustausch über Multiblock-Robot Flugeinheiten die ebenso wie Multiblock Flug-Roboter auf den Landeplattform-Aufsteckeinheiten (1-34) landen und starten, daß Multiblock Robot schwimm- und tauchfähige Individual- und Gesamtkomplexe aus Multiblock Robot-System-Standardzellen (1-28) mit Vortriebsschrauben-Flanschaufsteckeinheiten (9'-54) und Ruder-Flanschaufsteckeinheiten (9'-53) gebildet werden und die über Wasser fahrenden Multiblock Robot System-Standardzellen (1-28) jeweils einzeln verfahren oder zu mehreren hintereinander, wobei diese durch drehflexible Drehflansch-Steckverbindungen (18-2), miteinander verbunden sind und hierbei nur die letzte der Multiblock Robot-System-Standardzellen (1-28) des hintereinander angeordneten See-Verbandes Schrauben-Flanschaufsteckeinheiten (9'-54) und Ruder-Flanschaufsteckeinheiten (9'-53) erhält, daß die Multiblock Robot-System-Standardzellen (1-28) auf Schiffs-Flanschaufsteckeinheiten (1-34) einzeln, oder zu mehreren hintereinander auf, im entsprechenden Abstand zueinander entfernten, Drehflansch-Steckverbindungen (2-2) aufgesteckt sind, daß in diesem Fall nur die Schiffs-Flanschaufsteckeinheit (1-34) Vortriebsschrauben-Flanschaufsteckeinheiten (9'-54) und Ruder-Flanschaufsteckeinheiten (9'-53) erhält, daß die über Wasser und unter Wasser fahrenden Multiblock Robot Individualeinheiten und Gesamtkomplexe mit Teleskop-Zugangskanälen (1-37) ausgerüstet sind, die auf die Drehflansch-Steckverbindungen (2-2) in Bodenposition aufgesteckt sind und um 360°, frei schwenkbar sind und für die Fahrt zum Zielpunkt der Teleskop-Zugangskanal (1-37) in eingezogenem und eingeschwenktem Zustand, horizontal unter den Multiblock Robot-System-Standardzelle (1-28) gehalten wird, daß in See-Bodenposition der Teleskop-Zugangskanal (1-37) mit Multiblock Robot Gelenkarmen (9'-14) und Greifeinrichtungen (9'-56) und anderen Multiblock Robot Flanschaufsteckeinheiten für Unterwasser- und Bodenarbeiten sowie mit Multiblock unter Wasser Kameras (9'-33) ausgerüstet ist, daß die Teleskop-Zugangskanäle (1-37) in See-Bodenposition Bohrkopf-Flanschaufsteckeinheiten (9'-57) für Bodenbohrungen, Bagger-Flanschaufsteckeinheiten und die Förderung von Flüssigkeiten und festen Materialien erhalten, daß in See-Bodenposition außerdem Zugangsöffnungen (1-24) mit Schiebetüren (1-24') für den Zugang von Tauchern und Multiblock unter Wasser Robotern vorgesehen werden, daß die Teleskop-Zugangskanäle (1-37) zusätzlich von unter Wasser operierenden Multiblock Robot-System-Standardzellen (1-28) angesteuert und über Näherungssensoren (9'-21) der zentralen Drehflansch-Steckverbindungen (2-2) in deren Kopfposition, in deckungsgleiche Position mit den Drehflansch-Steckverbindungen (2-2) in Bodenposition der Teleskop-Zugangskanäle (1-37) gebracht wird und dann mit der eigenen Tauchfähigkeit vertikal auf und abbewegt werden, unter vertikaler Führung und mit Zugang zu den Teleskop-Zugangskanälen (1-37), daß die Teleskop-Zugangskanäle (1-37) konzeptionell wie die separaten, vertikalen Zugangskanäle (1-25') ausgelegt sind und intern, zusätzliche Fördertechnik-Einrichtungen für die kontinuierliche Förderung von flüssigen und festen Bodenschätze vom Seegrund zur Seeoberfläche und den Multiblock Robot Individual- und See-Gesamtkomplexen besitzen, daß die Gesamteinrichtung der über Wasser fahrenden Multiblock Robot System-Standardzellen (1-28) mit Teleskop-Zugangskanälen (1-37) und den entsprechenden Zusatzeinrichtungen, auch direkt unter Wasser von tauchfähigen Multiblock Robot System-Standardzellen (1-28) getragen und geführt werden und daß für den Einsatz von Tauchern Sauerstoffbox-Flanschaufsteckeinheiten (1-12), von den vertikalen, seitlich angeordneten Zugangskanälen (1-25), der Multiblock Robot-System-Standardzellen (1-28) abgesenkt werden, daß die Multiblock Robot Seekomplexe in gleicher und kombinierter Ausführung auch auf dem Festland, im Weltraum und auf anderen Planeten installiert werden.

8. Multiblock Robot System, nach einem der Ansprüche 1 bis 7, dadurch gekennzeichnet, daß flugfähige Multiblock Robot Individualsysteme durch Multiblock Robot System-Standardzellen (1-28) gebildet werden und je nach Flugeigenschaftserfordernissen kombiniert oder separat auf seitlich vorgesehene Drehflansch-Steckverbindungen (2-2) mit horizontalen Versorgungskanälen (10-1') vorgesehen werden, auf die Triebwerks-Flanschaufsteckeinheiten (9'-58) aufgesteckt werden, auf die zentrale Drehflansch-Steckverbindung (2-2) Vertikalrotor-Flanschaufsteckeinheiten (9'-59), aufgesteckt werden, wobei der zentrale Zugangskanal (1-25) und die ummantelnden Versorgungskanäle (10-1') durch die Vertikalrotor Flanschaufsteckeinheiten (9'-59) geführt werden, daß Heck-Flanschaufsteckeinheiten (9'-62) und Cockpit-Flanschaufsteckelnheiten (9'-61) auf die rückwärtige und die vordere Drehflansch-Steckverbindung (2-2) aufgesteckt werden, die durch Multiblock Robot Gelenkarme (9'-14) und Multiblock Robot Standardteile (2-1) bewegt werden, aufklappbar und schließbar sind und in Bodenposition mit Zustell- Bodenfahrwerk-Flanschaufsteckeinheiten (9'-9) und landeoperativen Bodenfahrwerk-Fanschaufsteckeinheiten (9'-9) ausgerüstet werden, daß Heck-Flanschaufsteckeinheiten (9'-62) mit einer Seitenruder Flanschaufsteckeinheit (9'-62) für die horizontale Steuerung und einer zusätzlichen Triebwerks- Flanschaufsteckeinheit (9'-58), die in der rückwärtigen Position der Heck-Flanschaufsteckeinheiten (9'-62) aufgesteckt sind, daß die Cockpit-Flanschaufsteckeinheiten (9'-61) mit Multiblock Robot Kontroll- und Bordcomputer Flanschaufsteckeinheiten, mit Cockpit Sitzeinheiten und weiteren Einheiten für die Durchführung von Flugoperationen ausgerüstet sind, daß je nach erforderlicher Flugeigenschaft, Flügel-Flanschaufsteckeinheiten (9'-63) seitlich auf die Drehflansch-Steckverbindungen (2-2) der Multiblock Robot System-Standardzellen (1-28) aufgesteckt sind, die ebenso wie die dann auf die Drehflansch-Steckverbindungen (2-2) in seitlicher Endposition der Flügel-Flanschaufsteckeinheiten (9'-63) aufgesteckten Triebwerks-Flanschaufsteckeinheiten (9'-63) um 360° frei schwenkbar sind und Höhen-Steuerungsaufgaben übernehmen und Vertikalstarts ermöglichen, indem nicht nur die seitlich aufgesteckten Triebwerks-Flanschaufsteckeinheiten (9'-58) um 90° eingeschwenkt werden, sondern zusätzlich die Flügel-Flanschaufsteckeinheiten (9'-63) und somit den Luftwiderstand beim Vertikalstart zu reduzieren, daß durch selbstoperierendes Positionieren über Näherungssensor Flanschaufsteckeinheiten (9'-21) das Zusammenstecken der Heck- und Cockpit Flanschaufsteckeinheiten (9'-62),(9'-61) mit den horizontalen Bug- und Heck Drechflansch-Steckverbindungen (2-2) der Multiblock Robot System-Standardzellen (1-28) erfolgt und alle Durchgangs- und Versorgungskanäle (12-1),(10-1'),(9-40) mit ihren Strom- und Kommunikationleitungen und Flüssigkeitsleitungen (10-1), geschlossen und miteinander verbunden sind.

9. Multiblock Robot System, nach einem der Ansprüche 1 bis 8, dadurch gekennzeichnet, daß Multiblock Robot Flugstart und Lande-Gesamtkomplexe gebildet werden, die aus Multiblock Robot System-Standardzellen (1-28) in Bodenposition bestehen, daß darüber eine ausschiebbare Plattform-Flanschaufsteckeinheit (1-26') aufgesteckt ist und eine Multiblock Standard Dach-Flanschaufsteckeinheit (1-26), die mit Inneneinrichtungen für die Aufgaben als Kontrollturm mit Flugleitkontroll-Flanschaufsteckeinheiten für Vertikal-Flugstart und Landeoperationen von Multiblock Robot Flugeinheiten ausgerüstet ist, daß durch die einzelnen zentralen Drehflansch-Steckverbindungen (2-2) der zentrale separate, vertikale Zugangskanal (1-25') geführt wird, der auf eine Fundament-Flanschaufsteckeinheit (9'-19) aufgesteckt ist, daß in Kopfposition des separaten, vertikalen Zugangskanals (1-25) eine Drehflansch-Steckverbindung (2-2) mit Näherungssensoren (9'-21) und einer Aufzugs-Flanschaufsteckeinheit (1-31) aufgesteckt ist, daß die vertikalstartfähigen Multiblock Robot Hubschrauber und Flugeinheiten mittels der Näherungssensoren (9'-21) an den Drehflansch-Steckverbindungen (2-2) der Multiblock Robot Hubschrauber und Flugeinheiten eigenen Multiblock Robot System-Standardzellen (1-28), selbstoperierend der Kopfposition des separaten, vertikalen Zugangskanals (1-25') zugeführt werden, dort horizontal und vertikal präzise positioniert und über die eigenen eigenen Vertikalrotoren (9'-59), oder die Triebwerke (9'-58), die für die vertikale Landung um 90° eingeschwenkt wurden, abgesenkt und auf die darunterliegende, bereits gelandete Multiblock Robot Flugeinheit, den bereits vertikal gelandeten Multiblock Robot Hubschrauber, oder aber bei noch keiner gelandeter Flugeinheit und keinem Hubschrauber, direkt auf die Drehflansch-Steckverbindung (2-2) der Dach-Flanschaufsteckeinheit (1-26) aufsetzt, daß für die Start- und Landeoperationen die einzelnen übereinander gelandeten Multiblock-Robot Flugeinheiten und Hubschrauber mit Ihren Flügeln (9'-63) und Vertikalrotoren (9'-59) so eingeschwenkt sind, daß die Multiblock-Robot Flugeinheiten und Hubschrauber in oberster Position beim Starten und Landen nicht mit den Triebwerks-Rückstrahlungen auf die Flügel der darunter befindlichen Multiblock-Robot Flugeinheiten und Hubschrauber auftreffen, daß in der Luft, während des Fluges, Multiblock-Robot Flugeinheiten und Hubschrauber, für Auftankoperationen, Material, Personen und Multiblock Roboter Austausch, mittels der Näherungssensoren (9'-21), selbstoperierend zueinander positioniert werden,

10. Multiblock Robot System, nach einem der Ansprüche 1 bis 9, dadurch gekennzeichnet, daß Multiblock Robot Raumfahrt Gesamtkomplexe gebildet werden, bei denen Multiblock Robot System-Standardzellen (1-28) mit seitlich auf Drehflansch-Steckverbindungen (2-2) aufgesteckten Startraketen-Flanschaufsteckeinheiten (9'-64) und optional oberhalb und unterhalb aufgesteckten Start- und Raumraketen-Aufsteckeinheiten (9'-64') aufgesteck werden, daß die Multiblock Robot System-Standardzellen mit aufsteckbaren Heck- und Bug-Schutzschild-Flanschaufsteckeinheiten (9'-60'),(9'-61') ausgerüstet werden, daß der Raumfahrt Gesamtkomplex ohne Abschußrampe durch kurzzeitige Erstzündung der Start- und Raumraketen-Flanschaufsteckeinheiten (9'-64') vom Boden abhebt, so daß die größeren Startraketen-Flanschaufsteckeinheiten (9'-64) vom Boden freikommen und erst dann durch deren Zündung der Start weiter durchgeführt wird während die Start- und Raumraketen-Flanschaufsteckeinheiten (9'-64') gleichzeitig wieder abgeschaltet werden, daß nach Durchdringen der Stratosphäre und Erreichen des Orbit die Startraketen-Flanschaufsteckeinheiten (9'-64) von ihren Drehflansch-Steckverbindungen (2-2) ausgeklinkt und abgestoßen werden und über die Wiedereinschaltung der Startraketen-Flanschaufsteckeinheiten (9'-64) der Weiterflug erfolgt, daß Multiblock Robot Raumfahrt Gesamtkomplexe zwei übereinander aufgesteckte Multiblock Robot System-Standardzellen (1-28) mit je zwei seitlich aufgesteckten Stadrakenten-Flanschaufsteckeinheiten (9'-64) umfassen, zwischen denen je eine Start- und Raumraketen-Flanschaufsteckeinheit (9'-64') angeordnet ist, daß die Multiblock Robot Raumfahrt Gesamtkomplexe von separaten, vertikalen Zugangskanälen (1-25') mit ummantelnden Versorgungskanälen (10-1') gestartet werden, die auch als Start- und Fluglandekomplex für Multiblock-Robot Flugeinheiten und Hubschrauber dienen, wobei die Multiblock Robot System-Standardzellen (1-28) vertikal und horizontal, zentral von den separaten, vertikalen und Zugangskanälen (1-25') mit ummantelnden Versorgungskanälen (10-1') geführt werden, daß die Multiblock Robot Raumfahrt Gesamtkomplexe mit eigenen Vertikalrotoren (9'-58) in große Höhen des Luftraums gehoben werden, die Vertikalrotoren dann von ihren zentralen Drehflansch-Steckverbindungen (2-2) ausgeklinkt werden und über einen Fallschirm (9'-66) der Innerhalb des zentralen, vertikalen Zugangskanals (1-25) der Vertikalrotoren untergebracht ist, zur Erde sinken, daß gleichzeitig die Startraketen-Flanschaufsteckeinheiten (9'-64) gezündet werden, daß über die seitlichen, vertikalen Zugangskanäle (1-25) und die horizontalen Zugangskanäle (12-1) der Multiblock Robot System-Standardzellen (1-28), Multiblock Weltraum Roboter, Satelliten, Multiblock Robot Planeten Fahrzeuge und Raumpiloten ausgesetzt und aufgenommen werden, daß die Multiblock Weltraum Roboter mit Raketen-Triebwerk-Flanschaufsteckeinheiten (9'-64') ausgerüstet sind, daß jeder Multiblock Robot Raumfahrt Gesamtkomplex als komplette Einheit in den Weltraum befördert und als Weitraumstation und auf anderen Planeten eingesetzt wird, daß Im Weltraum Multiblock Robot Raumfahrt Gesamtkomplexe Übereinander, hintereinander, und nebeneinander auf Dauer zusammengesteckt und auch nur temporär für Auftankoperationen, Material, Personen und Multiblock Roboter Austausch, mittels der Näherungssensoren (9'-21), selbstoperierend positioniert werden und daß die Multiblock Robot Raumfahrt Gesamtkomplexe mit allen Multiblock Robot Standardteilen und Flanschaufsteckeinheiten, sowie Multiblock Robot System-Standardzellen (1-28) des Multiblock Robot Gesamtkatalogs, über die jeweiligen Drehflansch-Steckverbindungen (2-2) und hierzu kompatiblen, nicht drehbaren Flanschsteckverbindungen (2-2') beliebig kombinierbar und gegeneinander austauschbar sind.
